# EUROPÄISCHE PATENTSCHRIFT

(11) **EP 3 280 349 B1**
(45) Veröffentlichungstag und Bekanntmachung des Hinweises auf die Patenterteilung: **23.12.2020**
(21) Anmeldenummer: 16716025.8
(22) Anmeldetag: 08.04.2016
(51) Int. Cl.: A61C 13/08, A61C 13/087, A61C 13/09

(54) **MEHRTEILIG AUFGEBAUTE DENTALPROTHESE SOWIE VERFAHREN ZU IHRER HERSTELLUNG**
MULTI-PART DENTAL PROSTHESIS AND PROCESS FOR ITS PRODUCTION
PROTHÈSE DENTAIRE EN PLUSIEURS PARTIES AINSI QUE PROCÉDÉ POUR SA FABRICATION

(30) Priorität: 09.04.2015 DE 102015105424; 30.06.2015 DE 102015110548; 04.08.2015 DE 102015112800
(43) Veröffentlichungstag der Anmeldung: 14.02.2018
(73) Patentinhaber: Fraunhofer-Gesellschaft zur Förderung der angewandten Forschung e.V., 80686 München (DE)
(72) Erfinder: WOLTER, Herbert, 97941 Tauberbischofsheim (DE); HÄUSLER, Florian, 33619 Bielefeld (DE); HOFFMANN, Jeannette, 97082 Würzburg (DE)
(74) Vertreter: Strehl Schübel-Hopf & Partner
(86) Internationale Anmeldenummer: PCT/EP2016/057776
(87) Internationale Veröffentlichungsnummer: WO 2016/162491

(56) Entgegenhaltungen:
- EP-A2- 0 282 633
- DE-A1- 3 827 657
- DE-A1-102013 108 594
- FR-A- 998 598
- US-A- 2 370 623
- US-A- 2 420 570
- US-A- 2 454 847

## Beschreibung

Die vorliegende Erfindung betrifft eine Dentalprothese (Zahnprothese bzw. Prothesenzahn sowie Teile einer solchen Prothese, auch als Zahnersatz bezeichnet, wie z.B. Onlays, Verblendschalen oder Kronen) mit hoher Verschleißresistenz aus mindestens zwei Komponenten, die sich in Bezug auf ihren E-Modul unterscheiden, aber beide eine ausgezeichnete Biegefestigkeit besitzen, und sich mit Hilfe eines einfachen Formensystems aus einer ersten und einer zweiten Negativform herstellen lassen. Bevorzugt unterscheiden sich die beiden Komponenten außerdem in ihrer Transluzenz.

Zur Wiederherstellung der Kaufunktion bei Verlust eines Teils oder des gesamten Zahnbestands ersetzt eine teil- oder vollprothetische Versorgung die fehlenden Zähne eines Patienten. Prothesenzähne werden aktuell in einem sehr arbeitsintensiven Prozess gefertigt. Als Materialbasis für vorgefertigte Prothesenzähne dient derzeit in der Regel Keramik bzw. in zunehmendem Maße PMMA (Polymethylmethacrylat). Beide Werkstoffe weisen jedoch signifikante Nachteile auf. Die relevanten Gründe für den geringeren Marktanteil von Keramikzähnen sind eine fehlende chemische Verbindung zum Prothesenbasismaterial, eine hohe Frakturanfälligkeit, eine aufwändige Reparatur/Nachbearbeitung im Fall einer Fraktur und eine hohe Abrasion am Antagonisten. Ein weiterer Nachteil ist, dass bei Keramikzähnen das Zusammenbeißen z. B. beim Essen hörbar ist ("Klappern"), wodurch der Tragekomfort gemindert wird. Kunststoffzähne auf Basis von Polymethylmethacrylat zeigen zwar erste Materialverbesserungen bzgl. Abrasionsfestigkeit (Verschleißresistenz) und Härte sowie Mundbeständigkeit, haben aber dennoch gravierende Mängel, wie eine starke Eigenabrasion aufgrund der geringen mechanischen Kennwerte von PMMA und einen Restmonomeranteil, der allergieauslösend sein kann.

Um eine dem natürlichen Zahn entsprechende Ästhetik zu erreichen, sind Prothesenzähne, aber auch andere vorgefertigte Materialien für Zahnersatz wie z. B. CAD/CAM-Blöcke, entsprechend der verschiedenen Bereiche des Zahns (Schneide- und Dentinbereich) oft mehrschichtig aufgebaut. In der älteren DE 36 10 683 wird vorgeschlagen, einen weichelastischen Kern zu verwenden, der aus (Meth)Acrylaten und copolymerisierbaren Urethan-Oligomeren in einer komplizierten Schrittfolge separat gefertigt und anschließend in den Hohlraum für die Herstellung der gesamten Prothese eingebracht wird, worauf der restliche Hohlraum mit einem hart auspolymerisierenden Kunststoff gefüllt und auspolymerisiert wird. Bekannt ist es, dass sowohl keramische als auch PMMA-basierte Prothesenzähne aus teilweise bis zu sechs Schichten bestehen können, die nach wie vor von Hand einzeln in die Prothesenzahnform eingebracht werden. Aufgrund dieses sowie anderer bereits vorgeschlagener aufwändiger Verfahren mit vielen manuellen Arbeitsschritten ist die bisherige Herstellung von Prothesenzähnen ein sehr arbeits-, zeit- und somit kostenintensiver Prozess. Ein weiteres Beispiel sind, neben den bereits erwähnten CAD/CAM-Blöcken für Ein-/ Mehrschichtkronen, bereits vorgefertigte Ein-/ Mehrschichtkronen, die über einen CAD/CAM-Prozess endbearbeitet werden. Der Vorteil der vorgefertigten Kronen, im Vergleich zu CAD/CAM-Blöcken, ist eine erhebliche Material-, Zeit- und somit Kostenersparnis. Weiterhin zählen noch Inlays, Onlays, Verblendschalen etc. zu den möglichen Indikationen.

Zum Erreichen der gewünschten ansprechenden Ästhetik wird außerdem häufig darauf geachtet, dass die unterschiedlichen Schichten von innen nach außen eine zunehmende Transluzenz aufweisen. EP 1 264 581 A1 offenbart die Herstellung eines Kunststoffzahns aus mindestens zwei unterschiedlichen, lichtpolymerisierbaren Massen, die jeweils beide aus einem anorganischen oder organisch gefüllten licht- und heißhärtbaren Monomer, insbesondere aus Methacrylatverbindungen, gebildet werden. Die Polymerisation erfolgt in einem Formwerkzeug derart, dass zuerst die transparentere Schneidemasse und danach die Dentinmasse schichtweise eingefüllt und aus- oder vorpolymerisiert werden, wobei es für die Formgebung der Schneidemasse einer Blende bedarf. Eine Nachhärtung beider Komponenten zusammen ist möglich.

US 2 420 570 A offenbart eine Dentalprothese mit einem inneren Teilbereich und einem äußeren Teilbereich, der härter ist, als der innere Teilbereich.

Die Systeme nach dem Stand der Technik haben jedoch insbesondere folgende Nachteile: PMMA-basierte Prothesenzähne müssen häufig nach einer gewissen Tragedauer einer Prothese gegen neue ausgetauscht werden, um so dem Verschleiß entgegenzuwirken. Es kommt in einigen Fällen zu einer Neuanfertigung der Prothese. Beides ist mit hohem Aufwand, Zeit und damit Kosten verbunden. Auch Keramikzähne können getauscht werden, jedoch ist der Aufwand dafür größer. Z.T. werden Keramikzähne auch provisorisch mit Komposit repariert. Dies sind jedoch keine dauerhaften Lösungen. Diese Problematik trifft auch auf anderweitig gefertigte Zähne für Zahnersatz auf einer gleichartigen Materialbasis zu.

Angesichts dieser Situation haben sich die Erfinder die Aufgabe gestellt, mehrteilig aufgebaute Dentalprothesen (vollständige Prothesenzähne oder Teilprothesen) für Zahnersatz bereitzustellen, umfassend mindestens einen ersten, inneren Teilbereich und einen zweiten, äußeren Teilbereich, wobei die beiden Teilbereiche physikalische Eigenschaften aufweisen, die denen des Dentinbereichs bzw. des Schneidbereichs von natürlichen Zähnen ähneln. Bevorzugt sollten die für die beiden Teilbereiche eingesetzten Materialien chemische Ähnlichkeiten aufweisen derart, dass eine gute Verbindung der beiden Teilbereiche möglich ist. Die Aufgabe umfasst auch die Bereitstellung eines Verfahrens und eines Formensystems für das Formen und Aushärten der erfindungsgemäßen Dentalprothesen.

Diese Aufgabe wird gelöst durch die Bereitstellung von Dentalprothesen wie voranstehend definiert, umfassend einen ersten, inneren Teilbereich, der ein erstes organisch polymerisiertes Material aufweist, und einen zweiten, äußeren Teilbereich, der ein zweites organisch modifiziertes und organisch polymerisiertes Kieselsäure(hetero)polykondensat aufweist, wobei der erste, innere Teilbereich eine Biegefestigkeit von über 80 MPa, vorzugsweise von mindestens 90 MPa und noch stärker bevorzugt von mindestens 95 oder sogar mindestens 100 MPa nach DIN EN ISO 4049: 2009 besitzt und einen kleineren E-Modul aufweist als der zweite, äußere Teilbereich, während der zweite, äußere Teilbereich eine Biegefestigkeit von mindestens 100 MPa, vorzugsweise von mindestens120 MPa und noch stärker bevorzugt von mindestens 130 MPa nach DIN EN ISO 4049: 2009 besitzt. Die Biegefestigkeiten der beiden Teilbereiche können identisch oder unterschiedlich sein, wobei eine hohe Biegefestigkeit des äußeren Teilbereichs (und ggf. eine höhere als die des ersten, inneren Teilbereichs) günstig ist. Vorzugsweise ist der äußere Teilbereich transluzenter gestaltet als der innere. Gegebenenfalls können der Dentinbereich und/oder der Schneidbereich jeweils in weitere Teilbereiche untergliedert sein, deren Eigenschaften in geeigneter Weise so gewählt wird, dass diese dem entsprechenden natürlichen Bereich möglichst nahe kommen. Weitere Teilbereiche können vorhanden sein, beispielsweise ein solcher, der einer Zahnbasis entspricht.

Wenn der erste, innere Teilbereich ein rein organisches Material ist, so werden für dessen Polymerisation vorzugsweise ähnliche (z.B. copolymerisierbare) oder dieselben Gruppen verwendet wie für den zweiten, äußeren Teilbereich. Hierbei kann es sich beispielsweise um (Meth-)Acryl-, insbesondere um (Meth-)Acrylatgruppen, stärker bevorzugt um Methacrylatgruppen, handeln. Es ist gegenüber dieser Ausgestaltung jedoch bevorzugt, dass auch der erste, innere Teilbereich ein organisch modifiziertes und organisch polymerisiertes Kieselsäure(hetero)polykondensat aufweist.

Organisch modifizierte Kieselsäure(hetero)polykondensate mit organisch polymerisierbaren Gruppen sind duromer härtende Materialien. Auch ein ggf. rein organisches Material, das für den ersten, inneren Teilbereich verwendet werden kann, sollte erfindungsgemäß vorzugsweise duromer härten.

Die erfindungsgemäß einsetzbaren, organisch polymerisierten Kieselsäure(hetero)-polykondensate werden durch organische Vernetzung organisch noch nicht polymerisierter Kondensate gewonnen. Diese stellen vorzugsweise eine gemeinsame Materialbasis für die Herstellung aller für die jeweilige Dentalprothese vorgesehenen Teilbereiche dar und können in günstiger Weise in Relation zueinander gewählt werden, wobei Eigenschaften wie Ästhetik, Schlagzähigkeit, Bruchfestigkeit, E-Modul, Abrasion und dergleichen je nach dem Teilbereich, für den sie vorgesehen sind, über die genaue Zusammensetzung der gewählten Harzmatrix, den Füllstofftyp und deren Anteile zueinander einstellbar sind.

Den einsetzbaren Kieselsäure(hetero)polykondensaten ist ein über Kohlenstoff an zumindest einem Großteil der Siliciumatome gebundener Rest gemeinsam, der in der Regel mindestens eine organisch polymerisierbare Gruppe oder einen reaktionsfähigen Ring, insbesondere eine reaktive cyclische Ethergruppe, trägt. Unter einer organisch polymerisierbaren Gruppe soll vorliegend verstanden werden, dass diese Gruppe einer Polyreaktion zugänglich ist, bei der reaktionsfähige Doppelbindungen oder Ringe unter dem Einfluss von Wärme, Licht, ionisierender Strahlung oder redoxinduziert (z.B. mit einem Initiator (Peroxid oder dgl.) und einem Aktivator (Amin oder dgl.) in Polymere übergehen (engl.: addition polymerization oder chain-growth polymerization). Bei der Polymerisation treten weder Abspaltungen von molekularen Bestandteilen auf, noch Wanderungen oder Umlagerungen. Diese Gruppen können in einer Ausführungsform der Erfindung außerdem bei Zusatz eines Thiols einer Thiolen-Polyaddition zugänglich sein; auch primäre und sekundäre Amine (insbesondere mit mindestens zwei, aber auch drei, vier oder mehr Aminogruppen) sollten sich anlagern lassen. Alternativ können sie einer ROMP (ring opening metathese polymerization) zugänglich sein. Beispiele für Letzteres sind Norbornen-Gruppen. Die reaktionsfähige(n) Doppelbindung(en) dieser Gruppe kann/können beliebig ausgewählt werden, beispielsweise eine Vinylgruppe oder Bestandteil einer Allyl- oder Styrylgruppe sein. Bevorzugt ist/sind sie Bestandteil einer Doppelbindung, die einer Michael-Addition zugänglich ist, enthält/enthalten also eine infolge der Nachbarschaft zu einer Carbonylgruppe aktivierte Methylengruppe. Unter diesen wiederum besonders bevorzugt sind Acrylsäure- und Methacrylsäuregruppen bzw. -derivate. Die organisch polymerisierbare Gruppe enthält in der Regel mindestens zwei und vorzugsweise bis zu ca. 100 Kohlenstoffatome. Sie kann direkt oder über eine beliebige Kupplungsgruppe an das Kohlenstoffskelett des Si-C-gebundenen Restes gebunden sein.

Unter dem Ausdruck "reaktive, cyclische Ethergruppe" soll erfindungsgemäß bevorzugt eine Glycidylgruppe (Epoxidgruppe) zu verstehen sein; er kann aber auch eine cyclische Ethergruppe mit vier Ringgliedern, also ein Oxetan bezeichnen. Die Glycidyl- bzw. Oxetangruppe kann unsubstituiert, mit einer, zwei oder, im Falle einer Oxetangruppe, drei Alkylgruppen, mit einer vicinal bindenden Alkylengruppe (z.B. einer Hexylengruppe) oder - wiederum nur im Falle einer Oxetangruppe - mit einer vicinal bindenden Alkylengruppe und einer Alkylgruppe substituiert sein.

Der Ausdruck "(Meth)Acryl..." soll vorliegend bedeuten, dass es sich jeweils um die entsprechende Acryl- oder die entsprechende Methacryl-Verbindung oder ein Gemisch von beiden handeln kann. Die vorliegenden (Meth)Acrylsäure-Derivate umfassen die Säuren selbst, ggf. in aktivierter Form, Ester, Amide, Thioester und dgl..

Die organisch modifizierten Kieselsäurepolykondensate der Erfindung können ausschließlich Silicium als (Halb-)Metall des anorganischen Gerüstes aufweisen; in dieses Gerüst können stattdessen aber auch weitere Metallatome eingelagert sein. Letztere werden vorliegend als Kieselsäureheteropolykondensate bezeichnet. Der Ausdruck "Kieselsäure(hetero)polykondensate soll beide Varianten umfassen. Die Kondensate enthalten über Kohlenstoff an Silicium gebundene organische Reste. Sie werden nachstehend auch als "Harze" oder "Harzsysteme" bezeichnet; als solche weisen sie ein anorganisches Si-O-Si-Netzwerk auf und sind einer organischen Polymerisation zugänglich. Der erste, innere Teilbereich und/oder der zweite, äußere Teilbereich der Dentalprothese können ausschließlich aus dem Harz gebildet werden; sie werden jedoch bei Bedarf und vorzugsweise mit Füllstoffen gefüllt, wie weiter unten näher erläutert. Stattdessen oder zusätzlich können weitere Zusätze wie Farbstoffe vorhanden sein. Die gefüllten und/oder anderweitige Zusätze enthaltenden Harze werden nachstehend als "Komposite" bezeichnet.

Für die Herstellung der Prothesenzähne bzw. des Zahnersatzes (der Dentalprothesen) unter Verwendung von Kieselsäure(hetero)polykondensaten für beide der oben genannten Teilbereiche werden in der Regel für jeden dieser Bereiche unterschiedliche Harze oder, vorzugsweise, Komposite unter Verwendung von verschiedenen Harzsystemen und einer vorzugsweise anorganischen, häufig hybriden Füllstoffmischung hergestellt. Als Füllstoffe können beispielsweise Silica-Nanopartikel und/oder verschiedene dentale Glaspartikel dienen. Die Materialien werden so gewählt, dass die ausgehärteten Komposite jeweils eine hohe Biegefestigkeit, aber unterschiedliche E-Module besitzen, um ihre physikalischen Eigenschaften dem des Dentins bzw. des Schneidmaterials natürlicher Zähne anzupassen.

Eine Charakterisierung der ausgehärteten Komposite kann mittels Bestimmung der mechanischen Eigenschaften, des Verschleißverhaltens über in-vitro-Abrasionsversuche am Kausimulator und der Transluzenz erfolgen. An den aus den Kompositen gefertigten Mehrschicht-Prothesenzähnen lassen sich Druckversuche durchführen.

Die oben angegebene Werkstoffbasis (Kieselsäure(hetero)polykondensate) kennt ein Fachmann aufgrund einer Vielzahl von Veröffentlichungen in einer sehr großen Zahl von Varianten mit den verschiedensten mechanischen und optischen Eigenschaften. Diese Kieselsäure(hetero)polykondensate sind auch unter der Bezeichnung ORMOCER®e (eingetragene Marke der Fraunhofer-Gesellschaft) bekannt. Diese Materialien können die notwendige Festigkeit, Härte, Abrasionsfestigkeit, Ästhetik und/oder Biokompatibilität liefern, die bestehenden Nachteile von Keramik bzw. PMMA beseitigen und die positiven Aspekte der beiden Materialien in einem Werkstoff vereinen. Das weiter unten genannte Haftvermittlersystem kann zusätzlich einen belastungsstabilen Verbund und in Kombination mit der Erweiterungs-/Reparaturfähigkeit eine langlebige Versorgung und damit eine signifikante Kostensenkung ermöglichen.

Das Herstellungsverfahren kann sich hinsichtlich des Verfahrensablaufs bzgl. der Herstellung der Dentalprothesen unterscheiden. Auf der Materialseite variieren die Konsistenz der Komposite und deren Härtungsart (photo-, thermisch-, redoxinduziert). Es kommt ebenfalls eine IR-Härtung in Frage. Als Werkstoffsysteme kommen für die verschiedenen Schichten des Zahns bevorzugt C=C- und spez. (Meth)acryl-, Norbornenyl- und weiterhin Epoxidfunktionalisierte Harz-/Kompositsysteme aus organisch modifizierten Kieselsäure(hetero)-polykondensaten (wie sie insbesondere in der DE 4011044, der EP 0450624, der DE 4133494, der DE 4310733, der DE 4416857.8, der DE 19627198, der DE 19910895, der DE 10349766.8 und EP 1914260, der DE 102005018351, der DE 102005018059, der DE 102011054440.2, der DE 102011053865.8, der DE 102012109685.6, der DE 102013108594.6 und der DE 102014115751.6 beschrieben sind) mit den für das Anforderungsprofil notwendigen chemischen/physikalischen Eigenschaften zum Einsatz. Weniger bevorzugt, aber möglich ist auch die Verwendung rein organischer, organisch polymerisierbarer Harze/Komposite mit den genannten, der organischen Polymerisation zugänglichen Gruppen. Wenigstens der äußere Teilbereich der Prothese sollte aber aus einem ein anorganisch-organischen Hybridmaterial (Kieselsäure(hetero)polykondensat) enthaltenden Harz oder Komposit gebildet sein, weil sich damit für die spätere Außenschicht eine hohe Biegefestigkeit bei geeignet hohem E-Modul sowie eine hohe Abrasionsfestigkeit erzielen lässt.

Insbesondere können als Material Komposite verwendet werden, wobei in ausgewählte ORMOCER®-Harze (also Kieselsäure(hetero)polykondensat-Harze) vorzugsweise funktionalisierte, häufig hybride Partikelmischungen eingearbeitet werden. Als Füllstoffe (im nm - µm-Bereich) können verschiedene kommerzielle methacrylatfunktionalisierte Dentalglaspartikel und Aerosile und/oder sprühgetrocknete bzw. über den Stöberprozess hergestellte funktionalisierte Partikel verwendet werden. Für eine homogene Verteilung und Dispergierung der Füllstoffe in der Harzmatrix werden z. B. ein SpeedMixer, ein Planetenmischer und/oder ein Dreiwalzwerk eingesetzt. Je nach Mischprinzip wirken unterschiedlich hohe Scherkräfte, und es kann optional mit Temperatur und/oder Vakuum gearbeitet werden. Durch Abstimmen der Füllstofftypen/Kombinationen sowie Menge und Verteilung der Füllstoffe in den ORMOCER®-Harzen werden die rheologischen, mechanischen und ästhetischen Eigenschaften modifiziert. Die Brechungsindizes werden durch Variation der Füllstoffkombination und durch Funktionalisierung der ORMOCER®-Harze mit brechungsindexmodifizierenden, vorzugsweise brechungsindexsteigernden Gruppen (z.B. Thio- oder Arylgruppen) so angepasst, dass unterschiedlich transluzente Komposite für das Dentin- und Schneidekomposit zur Verfügung stehen. Die Ästhetik der Komposite wird mittels Transluzenz-/ Farbmessung kontrolliert. Methacrylatgruppen der Harzsysteme können dabei (ebenso wie optional zu inkorporierende funktionelle Gruppen, wie z. B. OH-Gruppen) einerseits zur Härtung der Komposite beitragen und andererseits als potenzielle funktionelle Gruppen zur Anbindung von Haftvermittlermolekülen dienen.

Für die Materialien, insbesondere die Komposite für den opakeren Dentinkern sind die folgenden Aspekte bedeutsam:
- Es lassen sich im Rahmen der Erfindung kostengünstige Materialien (für Füllstoff und Matrix) auswählen, was von Vorteil ist, da Prothesenzähne allgemein ein Massenprodukt sind.
- Es ist wünschenswert, aber nicht zwingend, den Kern relativ opak zu gestalten, damit ggfs. darunter liegende Metallteile einer Prothese nicht durchscheinen und die Zahnfarbe verfälschen.
- Das Material wird so ausgewählt, dass es im ausgehärteten Zustand bruchzäh ist.
- Das Material wird so ausgewählt, dass es vorzugsweise thermisch und/oder strahlungsinduziert, besonders bevorzugt IR-härtbar ist.
- In vielen Fällen ist es günstig, wenn die Bruchfestigkeit diejenige vergleichbarer PMMA-Materialien (ca. 93 MPa) übersteigt.
- Eine chemische Anbindung zur Schmelzschicht sollte bei der Herstellung ermöglicht werden, z.B. durch Sandstrahlen mit oder ohne Haftvermittlersystem, oder aufgrund des Vorhandenseins von chemischen (reaktiven) Gruppen, die dem Dentinkern und der Schmelzschicht gemeinsam sind
- Eine chemische Anbindung zum Prothesenbasismaterial sollte (ggfs. durch Sandstrahlen mit oder ohne Haftvermittlersystem) gegeben sein.

Für die Materialien, insbesondere die Komposite für die transluzentere Schmelzschicht (Schneideschicht) sind die folgenden Aspekte bedeutsam:
- Es lassen sich im Rahmen der Erfindung kostengünstige Materialien (für Füllstoff und Matrix) auswählen, was von Vorteil ist, da Prothesenzähne allgemein ein Massenprodukt sind.
- Es ist wünschenswert, aber nicht zwingend, die außenliegende Schmelzschicht möglichst transluzent zu gestalten, um so eine möglichst natürliche Ästhetik der Prothesenzähne zu gewährleisten.
- Das Material wird so ausgewählt, dass es vorzugsweise thermisch und/oder strahlungsinduziert, besonders bevorzugt IR-härtbar ist.
- Die Bruchfestigkeit sollte diejenige vergleichbarer PMMA-Materialien (ca. 93 MPa) übersteigen.
- Das Material sollte im ausgehärteten Zustand eine hohe Härte und hohe Abrasionsresistenz aufweisen.
- Die chemische Anbindung zum Dentinkomposit kann entweder aufgrund von beiden Materialien eigenen Gruppen ohne weitere Maßnahmen möglich sein; alternativ kann die Oberfläche des Dentinkomposits durch Sandstrahlen aufgeraut und/oder mit einem Haftvermittler versehen werden.

Die Transluzenz der Komposite kann in weiten Grenzen durch die Variation der Matrix, des Füllstofftyps, der Füllstoffgröße und des Füllstoffgehalts eingestellt werden.

Gemäß einer günstigen Ausführungsform wird für die zwei- oder mehrschichtigen Prothesenzähne ein Haftvermittlersystem eingesetzt. Dieses gewährleistet einen belastungsstabilen, langlebigen Verbund zwischen den einzelnen Schichten bzw. eine Erweiterungs-/Reparaturmöglichkeit der eingesetzten Materialien. Insbesondere wird für die chemische Verbindung der beiden Zahnschichten ein an das Kompositsystem angepasster (bi-)funktioneller Haftvermittler (z.B. eine zwei identische oder unterschiedliche reaktive Gruppen aufweisende monomere oder oligomere Verbindung) verwendet, der die erste schon gehärtete Schicht mit dem nachträglich aufgetragenen pastösen Komposit verbindet. Der gewählte Haftvermittler bindet dabei chemisch und/oder physikalisch (retentiv) fest an das Dentinkomposit an und geht eine belastungsstabile Verbindung zum Schneidekomposit ein, das zum Zeitpunkt der Verarbeitung noch im organisch unvernetzten Zustand vorliegt. Eine vollständige "Abdichtung" durch einen optimalen Haftverbund ist vorteilhaft, damit Speichel bzw. Nahrungsmittelreste und Mikroorganismen nicht zwischen die Dentin- und die Schneidekompositschicht eindringen können. Dies würde unweigerlich zu Verfärbungen oder zur Trennung der Verbundschicht führen.

Haftvermittlersysteme für dentale Reparaturmaterialien sind insbesondere in der DE 10 2012 104139 A1 beschrieben. Dort findet der Fachmann eine genaue Anleitung dafür, welcher Haftvermittler sich für welche Kieselsäure(hetero)polykondensat-Harze bzw. -Komposite eignet. Bei der Wahl kommt es vor allem auf die Berücksichtigung der funktionellen Gruppen an, die sich einerseits auf der bereits verfestigten Kernoberfläche und andererseits in den organischen Gruppen der Schneidemasse befinden. Finden sich identische Gruppen, kann der Haftvermittler unter difunktionellen Verbindungen ausgewählt werden, die mit diesen Gruppen unter den Bedingungen der Härtung der Schneidemasse polymerisieren. Sind die Gruppen unterschiedlich, sollte ein Haftvermittler mit unterschiedlichen funktionellen Gruppen gewählt werden, wobei ein Teil dieser Gruppen mit Gruppen auf der Oberfläche des Dentinkerns, ein anderer Teil mit Gruppen der Schneidemasse reagieren kann.

Erfindungsgemäß lassen sich bevorzugt Schmelzkomposite herstellen und einsetzen, die eine sehr hohe Biegefestigkeit (von über 130 MPa, vorzugsweise von mindestens 150 MPa bis zu beispielsweise 169 MPa) sowie einen großen E-Modul (im Bereich von über 7,5 GPa, vorzugsweise von ca. 11 GPa oder darüber, beispielsweise 13,0 GPa) und eine große Härte (konkret konnten 91 HV1/10 erzielt werden) besitzen. Weiterhin konnte eine große Verschleißbeständigkeit erzielt werden. Entsprechende bevorzugte Dentinkomposite der vorliegenden Erfindung besitzen ebenso eine hohe Festigkeit (von über 130 MPa, vorzugsweise von mindestens 150 MPa bis zu beispielsweise 159 MPa) und einen kleineren E-Modul als ihn das in Kombination damit verwendete Schmelzkomposit besitzt (vorzugsweise 5 bis 7,0 GPa, beispielsweise 6,5 GPa). Wünschenswert ist weiterhin eine hohe Transluzenz von über 55%, vorzugsweise von mindestens 60%. Mit derartigen Kombinationen aus Schmelz- und Dentinkomposit lässt sich das Prinzip der harten Schale und des flexiblen Kerns besonders gut realisieren.

Die erfindungsgemäßen Dentalprothesen werden insbesondere individuell nach den Erfordernissen eines einzelnen Patienten gefertigt. Meist ist es möglich, die erfindungsgemäßen Dentalprothesen als nahezu vollanatomisch vorgefertigte Formen zu bilden, die zum Einsetzen in den Mund eines Patienten nur noch leicht angepasst werden müssen. Alternativ, wenn auch weniger bevorzugt, können sie aber auch in Form von Blöcken hergestellt werden, die anschließend über ein individualisierendes Verfahren, beispielsweise CAD/CAM, für einen speziellen Patienten hergerichtet werden.

In Verbindung mit dem vorgenannten, belastungsstabilen und damit langlebigen und ggf. reparierbaren Werkstoffsystem wird des Weiteren mittels eines neuartigen Formensystems eine einfache, gegebenenfalls automatisierbare Zahnersatzherstellung wie z. B. für Prothesenzähne, Onlays, Kronen oder Verblendungen ermöglicht.

Dieses System ist aus Form-Modulen aufgebaut. Mit seiner Hilfe soll eine einfache, gegebenenfalls auch automatisierbare Zahnersatzherstellung wie z. B. von Prothesenzähnen ermöglicht werden. Aufgrund des modularen Aufbaus ist die Umstellung des Prozesses von einem Einschicht- auf ein Mehrschichtsystem einfach realisierbar. Die Form ermöglicht die Herstellung von hochwertigen Einschicht- bzw. Mehrschichtzähnen/-kronen mittels eines belastungsstabilen und damit langlebigen, ggf. auch reparierbaren Werkstoffsystems. Der Prozess kann sich hinsichtlich des Aufbaus und des Materials der Form (z.B. Metall oder lichtdurchlässige Werkstoffe wie Glas) sowie des Verfahrensablaufs bzgl. der Herstellung der Zähne unterscheiden, was nachstehend näher erläutert wird.

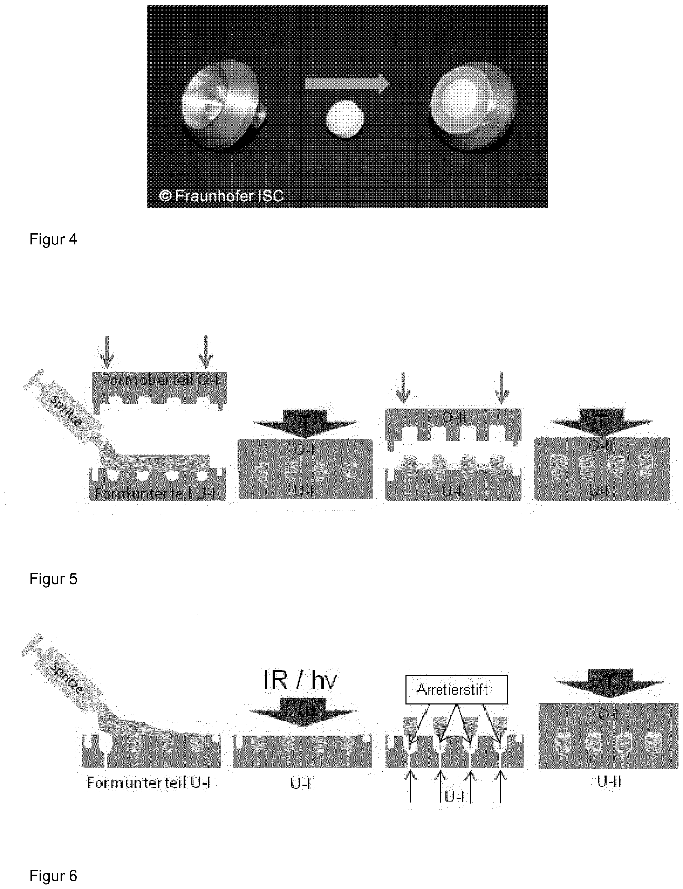

Die Module des Formensystems bestehen bevorzugt aus Metall, aber gegebenenfalls stattdessen aus Glas oder einem anderen, vorzugsweise elektromagnetische Strahlung wie Licht oder IR-Strahlung durchlässigen Material oder einer entsprechenden Materialkombination; sie können Einzelzahn- oder Mehrzahnformen aufweisen (siehe Figur 5). Letztere eignen sich, wenn mehrere Dentalprothesen als vorgefertigte Formen oder Blöcke erzeugt werden sollen, die erst anschließend individualisiert werden, wie oben beschrieben. Alle Flächen der Form sind so gestaltet, dass ein vollständiges Herauslösen des Prothesenzahns daraus gewährleistet ist. Das kann, soweit die Oberfläche der Form nicht bereits als solche eine ausreichend glatte Oberfläche besitzt, beispielsweise durch eine Hochglanzpolierung der Form oder deren Auskleidung mit einer Antihaftschicht bewirkt werden.

Zur Herstellung der mindestens aus zwei Schichten bestehenden Dentalprothesen, die wie oben erwähnt aus duromer härtendem Material bestehen sollten, kommt ein mehrteiliges Formensystem zum Einsatz, das aus zumindest einer ersten und einer zweiten Negativform für die Herstellung von Dentalprothesen mit einem Innenbereich und mindestens einem weiteren Teilbereich besteht, wobei die zweite Negativform so ausgebildet ist, dass sie einen zweiten Hohlraum bildet, der im Wesentlichen die Form der Dentalprothesen besitzt, wobei
(a) jede Negativform aus zumindest zwei Teilen besteht, und
   (i) die erste Negativform so ausgebildet ist, dass ein erster Hohlraum gebildet wird, der ein kleineres Volumen als der zweite Hohlraum besitzt, und wobei die Geometrie des ersten Hohlraums so gewählt ist, dass ein mit der ersten Negativform hergestellter Innenbereich (Innenteil) der Dentalprothese in der zweiten Negativform vollflächig oder teilweise mit einer Außenschicht beschichtet oder mit dem mindestens einen weiteren Teilbereich versehen werden kann, so dass die fertige Dentalprothese oder der Innenbereich und der mindestens eine weitere Teilbereich ausgebildet wird/werden,
      und/oder
   (ii) die zweite Negativform aus einem der Teile der ersten Negativform sowie einem weiteren Teil besteht,
   oder
(b) die erste Negativform einteilig ist und eine Öffnung für den Zutritt von elektromagnetischer Strahlung (z.B. Licht im sichtbaren Bereich oder Strahlung außerhalb davon, beispielsweise von IR-Strahlung) besitzt und die zweite Negativform aus der ersten Negativform oder einem ersten Teil einer zweiten Negativform jeweils in Kombination mit einem zweiten Teil besteht, wobei die Formen so gestaltet sind, dass sie miteinander einen Hohlraum mit einer Geometrie bilden, die so gewählt ist, dass ein mit der ersten Negativform hergestelltes Innenteil der Dentalprothese in der zweiten Negativform vollflächig oder teilweise mit einer Außenschicht beschichtet oder mit dem mindestens einen weiteren Teilbereich versehen werden kann, so dass die fertige Dentalprothese oder der Innenbereich und der mindestens eine weitere Teilbereich ausgebildet wird,
wobei alle genannten Negativformen nach dem Zusammensetzen aus den jeweiligen Teilen maximal eine oder zwei Öffnungen besitzen, aus der/denen überschüssiges Harz und/oder Luft entweichen kann.

Aufgrund der erfindungsgemäß einzusetzenden Materialien ist das Formensystem auf duromere Härtung ausgelegt. Das bedeutet, dass das Material in der Regel in die offene Form gefüllt wird. Entsprechend besitzen die zusammengesetzten Formen weder einen Einfüllstutzen, wie er für thermoplastisches Spritzgießen benötigt wird, noch ein Überdruckventil, und das Formensystem kann unabhängig von jeglicher Druckbeaufschlagung befüllt werden, sieht man einmal davon ab, dass ein geringer Druck beim Befüllen mit einer Spritze oder dergleichen auftreten kann. Günstig, wenn auch nicht immer notwendig, ist eine kleine Öffnung möglichst im zweiten (meist oberen) Teil der Negativformen, sofern ein solcher zweiter Teil vorgesehen ist, durch die gegebenenfalls überschüssiges Harz oder Luft entweichen kann. Eine zweite solche Öffnung in einem anderen Teil der Negativform ist in manchen Ausführungsformen nicht ausgeschlossen, wenn dadurch der Abfluss von überschüssigem Material oder das Entweichen von Luft erleichtert werden kann. Das Formensystem der vorliegenden Anmeldung ist damit deutlich kostengünstiger und einfacher zu bauen als ein vergleichbares, für thermoplastisches Spritzgießen vorgesehenes Formensystem.

Die Herstellung wird im Folgenden der Einfachheit halber erst einmal am Beispiel von Zweischicht-Prothesenzähnen, bestehend aus einem Dentinkern und einer Schmelzschicht, in einer vereinfachten Zahnform dargestellt. Allerdings ist das Verfahren auf ein Mehrschichtsystem mit mehr als zwei Schichten anwendbar/anpassbar, indem dritte und gegebenenfalls noch weitere zweiteilige Negativformen der nachstehend beschriebenen Art bereitgestellt werden. Dabei gilt das Prinzip, dass der Zahn oder das Prothesenteil von innen nach außen aufgebaut wird, d.h. es wird zuerst ein Innenkern erzeugt, der sodann schichtweise mit weiterem Material umgeben wird.

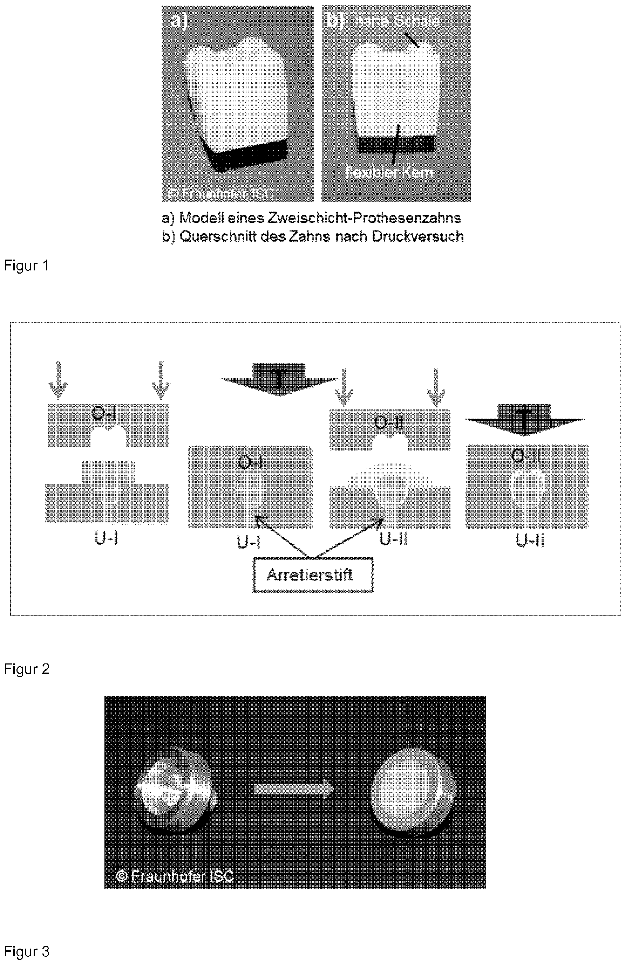

Das Formensystem ist wie erwähnt modular aufgebaut; es besteht aus mehreren Formen-Teilen. Eine Prinzipskizze für eine erste Ausgestaltung des Formensystems ist in Fig. 2 dargestellt. So stehen für die Herstellung von hochwertigen Einschicht- bzw. Mehrschichtzähnen und Einschicht- bzw. Mehrschichtkronen die entsprechenden Formteilesätze zur Verfügung, mit denen eine Teil-/Vollautomatisierung des Prozesses ermöglicht wird. Das Prinzip des Formensystems der Figur 2 beruht auf dem Schema "jeweils eine aus mindestens zwei Teilen zusammengesetzte Form pro Teilbereich", wobei zuerst mithilfe einer ersten, aus mindestens zwei Teilformen bestehenden Form ein Kern, meist der Dentinkern, geformt wird, der sodann in eine zweite Form überführt wird, in der er mit weiterem Material für den nächsten Bereich versehen wird. Soll der Prothesenzahn zweiteilig aufgebaut werden, handelt es sich dabei um den Schneidebereich. Soll der Prothesenzahn mehrere Schichten um den Dentinkern herum aufweisen, kann es sich dabei um einen äußeren Dentinbereich oder inneren Schneidebereich handeln, der beispielsweise einen etwas höheren E-Modul und/oder eine etwas höhere Transluzenz aufweist als der Kern, aber noch nicht die Werte besitzt, die der äußerste Bereich aufweisen soll. Auch kann ein Basisbereich an den Dentinkern angefügt werden.

Zumindest die zweite Negativform besteht demnach aus mindestens (und üblicherweise nicht mehr als) zwei Teil-Formen, die zusammen die Kontur der Negativform des gesamten Zahns oder Zahnersatzes besitzen. In Variante (a), die gestaltet sein kann wie in Figur 2 gezeigt, besteht auch die Negativform für den ersten Hohlraum (für den Dentinkern) aus einer derartigen zwei- bzw. mehrteiligen Form. In der ersten Ausgestaltung (i) dieser Variante kann der Dentinkern nach seiner Verfestigung aus der Form herausgenommen und in die nächste Form überführt werden. Dies lässt die Möglichkeit offen, den zweiten (oder einen weiteren) Teilbereich über weite Bereiche der Oberfläche hinweg auszubilden, beispielsweise bis tief in den seitlichen Bereich hinein, der im natürlichen Zahn den Zahnhals bildet. In der zweiten Ausgestaltung (ii) dieser Variante kann ein Teil der ersten Negativform, beispielsweise deren Oberteil, nach Verfestigung des Kerns abgenommen und für die Ausbildung des zweiten Teilbereichs durch ein anderes Oberteil mit größerem Hohlraum ersetzt werden, während der verfestigte Kernbereich im anderen Teil der ersten Negativform verbleibt. Dies ist kostenmäßig günstiger und arbeitstechnisch einfacher, lässt aber nicht ganz die Freiheit der Ausbildung des zweiten Teilbereichs wie für die erste Ausgestaltung (i) der Variante (a) beschrieben.

Die Verfestigung des Harzes bzw. Komposits erfolgt in allen Varianten (a) vorzugsweise durch Wärme, insbesondere bei der Verwendung von Metallformen. Sie kann dann auch photoinduziert (beispielsweise durch Licht) oder mit Hilfe von IR-Strahlung durchgeführt werden, wenn zumindest eine der Teil-Formen aus Glas oder einem anderen die Strahlung transmittierenden Material besteht. Eine Kombination (photoinduzierte/IR-induzierte Verfestigung des Kerns und wärmeinduzierte Verfestigung des Schneidebereichs oder umgekehrt) ist natürlich ebenfalls möglich.

In Variante (b) wird auf das Form-Oberteil der ersten Negativform verzichtet. Das Harz oder Komposit wird in die Form eingefüllt, beispielsweise bis zu deren Oberkante. Dies ist möglich, da die Form des Dentinkerns nicht genau den natürlichen Gegebenheiten entsprechen muss; erst die Außenform muss die für das Einsetzen des Zahnersatzes erforderlichen geometrischen Gegebenheiten besitzen. Wegen des Fehlens des Form-Oberteils kann der Dentin-Kern in dieser Variante strahlungsinduziert (z.B. lichtinduziert oder mittels IR) verfestigt werden. Die Variante (b) ist in Figur 6 schematisch dargestellt.

Die Negativformen verlaufen nach oben hin vorzugsweise leicht konisch, um das Herauslösen des Prothesenzahns nach der Polymerisation zu erleichtern. Für zweiteilig aufgebaute Zähne werden wie erwähnt zwei Negativformen benötigt, die erste für den Dentinkern und die zweite für den fertigen Zahn, bei dem eine Schneide- oder Schmelzbereich auf den Kern aufgebracht wurde. In Figur 2 sind die einzelnen Formen jeweils in ein Unterteil und ein Oberteil (Unterteil U-I und Oberteil O-I für den Kern, Unterteil U-II und Oberteil O-II für den Gesamtzahn) untergliedert; selbstverständlich können die Formen auch seitlich oder mit einer anderen Geometrie zusammengesetzt werden.

Neben dem von der Form gebildeten Hohlraum, der für den Dentinkern bzw. den mit einer oder mehreren Schichten weiter aufgebauten Zahn vorgesehen ist, kann in jeder Form ein weiterer, sich an den für den Kern bzw. Zahn vorgesehenen Hohlraum direkt anschließender Hohlraum vorgesehen, der sich gegebenenfalls bis zur Außenseite der Form erstrecken kann. Dieser kann z. B. mittig und über die gesamte Höhe bis zur Unterseite (Basalseite) des späteren Zahns als runde Öffnung mit einem Durchmesser von etwa 3 mm ausgebildet sein; er wird ebenfalls mit Harz bzw. Komposit befüllt und dient als

Arretier- und/oder Greifstift beim weiteren Bearbeiten oder Lagern. Die runde Öffnung kann als Form beispielsweise im Unterteil ausgebildet sein; sie kann aber auch in dem Bereich ausgebildet sein, in dem die beiden Formen aneinander stoßen, beispielsweise durch korrespondierende Halbschalen.

Zur Herstellung der Zähne wird erfindungsgemäß ein erstes Harz oder Komposit in eines der Formteile für den Innenbereich des späteren Zahns gefüllt, was beispielsweise mit Hilfe einer Spritze geschehen kann. Die Form wird ggf. mit dem zweiten oder den anderen Formteilen verschlossen, welche(s) in selteneren Fällen ebenfalls bereits Harz enthalten kann/können, beispielsweise im Falle des Vorhandenseins von Hinterschneidungen oder dgl., in die das Harz bei offener Form leicht mit einer Spritze, einem Löffel oder einem anderen Werkzeug hineingedrückt werden kann. Danach wird das Harz oder das Komposit thermisch verfestigt. Für ein besseres Fließverhalten des Harzes oder Komposits wird die Form dabei ggf. auf eine erhöhte Temperatur vorgewärmt. Die thermische Verfestigung kann beispielsweise bei 100°C für mehrere Stunden erfolgen; sie kann in diesem Stadium, muss aber nicht, bis zur völligen Aushärtung durchgeführt werden. Danach wird der verfestigte Kern gegebenenfalls aus der Form genommen. Dies gelingt beispielsweise, indem man den Arretierstift von außen in Richtung des Kerns drückt. Der Kern kann danach gegebenenfalls in den Bereichen, in denen er mit dem Schneidebereich überschichtet werden soll, sandgestrahlt und/oder mit einem Haftvermittler beschichtet werden. Sodann wird er gegebenenfalls in eines der Formteile für die nächste Form eingesetzt, die auch Platz für den Arretierstift bietet. Hier bietet sich die Möglichkeit, den Hohlraum für den bereits ausgehärteten Arretierstift von der inneren Zahnform selbst bis zur Außenseite der Form etwas großzügiger zu wählen: Wenn der Arretierstift nämlich nicht ganz dichtend in der Form sitzt, kann beim Verschließen überschüssiges Harz durch den dadurch entstandenen Kanal zwischen dem Arretierstift und der Form nach außen gedrückt werden. Dies kann ggf. eine hierfür ansonsten in der Form vorzusehende Öffnung überflüssig machen. Wiederum ggf. unter Erwärmung der Form wird das Harz oder das Komposit für die nächste oder äußerste (Schmelz)Schicht eingefüllt, beispielsweise mittels einer Spritze. Eine Öffnung in einem der Teile, insbesondere im Oberteil, kann als Ablauf für überschüssiges Material dienen. Es folgt eine thermische Verfestigung wie für den Kern beschrieben. Wurde der Kern nicht vollständig ausgehärtet, können die Bedingungen dabei so gewählt werden, dass beim Verfestigen der Schmelzschicht auch der Kern vollständig durchhärtet; diese Variante verbessert die chemische Anbindung der beiden Bereiche aneinander. In einer weiteren Alternative erfolgt die Verfestigung in den Formen nicht bis zum völligen Aushärten, sondern erst nach der Entformung des Zahns durch Wärme oder Licht.

Nach Herauslösen des Prothesenzahns aus der Form wird abschließend der Arretierstift vom Zahn abgelöst, sofern er nicht als Fortsatz des Prothesenzahns für weitere Verarbeitungsschritte oder für die spätere Anwendung (z.B. als mechanische Verankerung für ein Implantat o. dgl.) ganz oder teilweise benötigt wird.

Mit diesen Formen wird das Potenzial für ein effektiveres Herstellungsverfahren geschaffen, mit dem höhere Stückzahlen pro Zeiteinheit reproduzierbar hergestellt werden können.

Ein Verfahren zur Herstellung der Prothesenzähne wird nachfolgend mit Bezug auf die Figur 2 für ein Beispiel eines zweischichtigen Prothesenzahns noch näher beschrieben:
Es werden vier verschiedene Formteile (Unterteil U-I und U-II, Oberteil O-I und O-II) verwendet. Unterteil U-I bildet zusammen mit Oberteil O-I, analog U-II mit O-II, eine zweiteilige Form, die als Kontur die Negativform des Dentinbereichs des Prothesenzahns darstellt. Zusätzlich befindet sich mittig, über die gesamte Höhe des Formunterteils U-I (analog U-II) bis zur Unterseite (Basalseite) des späteren Zahns, eine runde Öffnung (Durchmesser z.B. ca. 3 mm). Das Dentinkomposit kann dann beispielsweise über eine "Spritze" in das Unterteil U-I gefüllt werden (optional mit einer definierten Druckbeaufschlagung), wobei die runde Öffnung in Stiftform regelmäßig mitausgefüllt wird und dann als Arretier- und Greifstift dienen kann. Anschließend wird die Form mit dem Oberteil O-I geschlossen; das Material wird dann im Regelfall thermisch ausgehärtet. Der polymerisierte Dentinkern wird aus dem Unterteil U-I gelöst und kann über den Greifstift, der zugleich als Arretierstift dient, in das Unterteil U-II eingesetzt werden, das zusammen mit dem Oberteil O-II die Negativform des endgültigen Zahns samt Schneidebereich darstellt. Der Dentinbereich wird dann in vielen Fällen sandgestrahlt und/oder mit einem passenden Haftvermittlersystem behandelt, und das Unterteil U-II wird beispielsweise wieder mittels einer "Spritze" mit Schneidekomposit gefüllt. Das Oberteil O-II wird auf das Unterteil U-II aufgebracht und das Material in der Form thermisch ausgehärtet. Die Befüllung erfolgt dabei derart, dass der sich bildende Hohlraum (gebildet aus Oberteil O-II und Unterteil U-II) komplett gefüllt wird. Abschließend kann, nach Herauslösen des Prothesenzahns aus der Form, der Stift von der Unterseite des Zahns abgelöst werden.

Die Systeme und Prothesenzähne weisen zumindest zum Teil, üblicherweise aber alle nachfolgenden Vorteile auf:
- Einfach handhabbare modulare Form zur Herstellung von Zahnersatz
   - Effektive Herstellung von Prothesenzähnen bzw. vorgefertigten Materialien für Zahnersatz und Realisierung einer Teil-/Vollautomatisierung mit hohem Produktionsdurchsatz bei gleichbleibender Qualität
   - Ersatz des bisher arbeits-/zeitaufwändigen und somit kostenintensiven Verfahrens aufgrund eines effektiver gestalteten Prozesses
- Belastungsstabile biokompatible Materialsysteme
   - Eine dem natürlichen Zahn angepasste Ästhetik/Transluzenz durch Mehrschichtaufbau
   - Hohe Abrasionsresistenz von z. B. Prothesenzähnen bei guter chemischer Anbindung an die Prothesenbasis sowie guter Reparaturfähigkeit
   - Ggf. monomerfreie und somit biokompatible Werkstoffbasis, wodurch eine toxikologische und allergologische Unbedenklichkeit für den Einsatz als Zahnersatzmaterial gegeben ist
   - Erhöhter Tragekomfort gegenüber Keramikzähnen (kein "Klappern")

Mit den beschriebenen neuartigen modular aufgebauten mehrteiligen Formen können in Verbindung mit einem belastungsstabilen Werkstoffsystem Ein/- Mehrschichtprothesenzähne, CAD/CAM-Blöcke für Ein-/Mehrschichtkronen, vorgefertigte CAD/CAM-Ein-/Mehrschichtkronen sowie Inlays, Onlays und Veneers (Verblendschalen) angefertigt werden. Zudem ist damit die Entwicklung einer automatisierten und somit kostengünstigen Produktion von ästhetischem und hochwertigem Zahnersatz möglich.

Das Formen-System ist für die Anwendung in Kombination mit den erfindungsgemäßen Materialien auf Kieselsäure(hetero)polykondensat-Basis (Harzen, Kompositen) besonders geeignet, ist aber darauf nicht beschränkt. Es eignet sich auch für die Herstellung von mehrteilig aufgebauten Dentalprothesen aus rein organischen Materialien, insbesondere solchen mit organisch vernetzbaren Gruppen wie denen, die für die anorganisch-organischen Hybridmaterialien aufgeführt sind, oder aus einer Kombination mindestens eines rein organischen Materials mit mindestens einem organisch polymerisierbaren Kieselsäure(hetero)polykondensat. Im letzteren Fall wird nicht zwingend, aber vorzugsweise die äußere oder die äußerste Schicht (Schmelzschicht) aus dem anorganisch-organischen Hybridmaterial gebildet.

Nachstehend soll die Erfindung anhand von konkreten Ausführungsbeispielen näher erläutert werden.

### A. Bestimmungsmethoden

### (1) Prüfkörperpräparation und Durchführung - Härteprüfung nach Vickers

- Die Prüfkörperherstellung und Prüfung erfolgte in Anlehnung an die Prüfnorm DIN EN 843-4
- Zur Ermittlung der Härte wurden runde Prüfplättchen mit 2 mm Höhe und einem Durchmesser von 18 mm mittels antihaft-beschichteter Edelstahlform gefertigt
- Als plane Auflage diente eine mit PET-Folie bedeckte Glasscheibe
- Einfüllen des entlüfteten Harzes/Komposits
- Als plane Auflage wurde eine mit PET-Folie bedeckte Glasscheibe auf die Oberseite des Komposits aufgebracht
- Nach der Aushärtung (wie in den Beispielen beschrieben) wurden die Prüfkörper aus den Formen gelöst
- Die Lagerung erfolgte bei Raumtemperatur
- Die Prüfung erfolgte mit dem Härteprüfgerät V-100-C1 der Firma Leco
- Es wurde mit einer Kraft von 1 kp bei einer Haltezeit von 10 s gemessen.

### (2) Prüfkörperpräparation und Durchführung - Dreipunktbiegeversuch

- Die Prüfkörperherstellung und Prüfung erfolgte in Anlehnung an die Prüfnorm DIN EN ISO 4049: 2009
- Zur Ermittlung der Biegefestigkeit und des E-Moduls wurden quaderförmige Prüfstäbchen mit den Maßen 2 mm x 2 mm x 25 mm mittels antihaft-beschichteten Metallformen hergestellt
- Einfüllen des entlüfteten Harzes/Komposits
- Zur Vermeidung der Bildung einer Sauerstoffinhibierungsschicht wurden das in die Form eingefüllte Harz/Komposit mit einer Polyethylenterephthalat (PET)-Folie plan bedeckt
- Nach der Aushärtung (wie in den Beispielen beschrieben) wurden die Stäbchen aus den Formen gelöst und zum Entgraten beide Seitenflächen über ein Schleifpapier der Körnung 1200 geschliffen und wie in den Beispielen beschrieben gelagert.
- Die Lagerung erfolgte bei 40°C für 24 Stunden bei den thermisch gehärteten bzw. 36 Stunden bei den lichtgehärteten Stäbchen
- Als Prüfgerät wurde die Universalprüfmaschine Z100 der Firma Zwick/Roell eingesetzt.
- Dabei wurde mit einem Standardkraftaufnehmer von 100 N gemessen. Die Stützweite der Auflagerrollen betrug 20 mm, der Radius dieser sowie der des Biegestempels 1 mm und die Prüfgeschwindigkeit 3 mm/min.

| Übersicht bestehender Materialien | | | |
|---|---|---|---|
| | natürlicher Dentin - Schmelz | PMMA | Glaskeramik |
| Biegefestigkeit [MPa] | n.b. | 50-130 | 150-420 |
| E-Modul [GPa] | 11-85 | 2,0-3,5 | 30-95 |

PMMA zeigt im Gegensatz zu natürlichem Dentin/Schmelz einen sehr geringen E-Modul, woraus auch eine hohe Eigenabrasion resultiert. Glaskeramik zeigt bezüglich der Festigkeit sehr hohe Werte und der E-Modul liegt im Bereich von natürlichem Dentin/Schmelz. Nachteilig an Glaskeramik sind die aufwändige Bearbeitung sowie die in der Beschreibung angegebenen Defizite.

| Mindestanforderungen an die erfindungsgemäß einsetzbaren Harze/Komposite (in ausgehärtetem Zustand) | | |
|---|---|---|
| | Schmelzbereich | Dentinbereich |
| Biegefestigkeit [MPa] | >100 | >80 |
| E-Modul [GPa] | >7,5 (vorzugsweise >11) | >5 |

Festigkeit und E-Modul des Dentinkerns sollten die in der Tabelle angegebenen Mindestwerte aufweisen. Das Schmelzkomposit als außenliegende Schicht sollte u.a. für eine hohe Abrasionsstabilität bzgl. Festigkeit/E-Modul möglichst hohe Werte erreichen, die idealerweise in dem Bereich des natürlichen Dentin - Schmelz liegen.

### (3) Präparation der Prüfkörper und Durchführung - Transluzenzmessung

Aus den Kompositen wurden mittels Edelstahlform runde Prüfplättchen mit 2 mm Höhe und einem Durchmesser von 18 mm gefertigt. Für einen luftdichten Abschluss auf der Unter- und Oberseite des Komposits wurden PET-Folien und als glatte Auflage- und Abdeckflächen Glasscheiben verwendet. Die thermisch härtenden Komposite wurden bei 100°C für 4 h im Ofen, lichthärtende Komposite jeweils 100 s mit einem Blaulichtstrahler (Wellenlänge von ca. 380 - 520 nm) von beiden Seiten im Abstand von 0,5 cm ausgehärtet. Die Vermessung der Transluzenz erfolgte mit dem Spektralphotometer Color i7 der Firma X-Rite über einen Wellenlängenbereich von 360 bis 750 nm.

### B. Präparation der Prüfkörper und Antagonisten sowie Durchführung der Abrasionsuntersuchungen

Das Verschleißverhalten von Kompositen wurde am Kausimulator CS-4.8 der Firma SD Mechatronik untersucht. Zur Einbettung der Prüfkörper wurden Probenhalter aus Aluminium mit einem Durchmesser von ca. 1,5 cm verwendet (s. Fig. 3, die den Probenhalter vor und nach der Präparation mit Komposit zeigt). Die entsprechenden Komposite wurden in die Probenhalter im Überschuss eingefüllt. Die thermisch härtbaren Komposite wurden bei 100°C im Ofen für 4 h, lichthärtbare Komposite 100 s mit einem Blaulichtstrahler (Wellenlänge von ca. 380 - 520 nm) im Abstand von 0,5 cm ausgehärtet. Die ausgehärteten Prüfkörper wurden 24 h bei 23°C und Luftfeuchtigkeit von 40% bis zur Prüfung gelagert und vor der Messung mit Hilfe eines Schleifgeräts mit Schleifpapier der Körnung 4000 bei 300 rpm plangeschliffen.

Zur Einbettung der Antagonisten (abradierender Körper) wurden angeschrägte Antagonistenhalter aus Aluminium mit einem Durchmesser von ca. 1,5 cm verwendet. Als Antagonisten wurden Kugeln aus Degussit, einer hochverdichteten Aluminium-Oxid-Keramik mit einem Durchmesser von 5 mm eingesetzt und mit PMMA fixiert. Fig. 4 zeigt einen solchen Antagonistenhalter aus Aluminium vor und nach der Präparation mit der Antagonistenkugel aus Degussit.

Die mit Material präparierten Probenhalter werden in die Probenkammern und die vorbereiteten Antagonistenhalter an die Antagonistenstempel montiert.

Folgende Versuchsparameter wurden am Gerät eingestellt:

| | |
|---|---|
| Belastung der Proben während des Versuchs: | 5 kg je Probe |
| Auf- und Abwärtshub: | 2 mm |
| Auf- und Abwärtsgeschwindigkeit: | 60 mm / s |
| Horizontalbewegung: | 1 mm |
| Horizontalgeschwindigkeit: | 40 mm / s |
| Bewegungszyklen : | 300.000 |

Die Optionen "Zeitoptimierte Bewegung" und "Minimaler Impuls beim Auftreffen" wurden aktiviert.

Folgende Einstellungen wurden für das Thermocycling vorgenommen:

| | |
|---|---|
| Temperaturen des Spülwassers: | 5 und 55°C |
| Spüldauer: | 30 s |
| Ablaufzeit des Wassers | 11 s |

### C. Beispiele für die Herstellung der Harze und Komposite

### C1. Harzsysteme

### C1A. Harzsystem A (Synthese gemäß DE 44 16 857 C1)

Zur Vorlage von 125,0 g (0,503 mol) 3-Glycidyloxypropylmethyldiethoxysilan werden unter trockener Atmosphäre Triphenylphosphin als Katalysator, BHT (3,5-Di-tert.-butyl-4-hydroxytoluol) -als Stabilisator und anschließend 47,35 g (0,550 mol) Methacrylsäure zugetropft und bei 80°C gerührt (ca. 24 h). Die Umsetzung kann über die Abnahme der Carbonsäurekonzentration mittels Säuretitration sowie dem Epoxidumsatz mittels Epoxidtitration/NMR verfolgt werden. Nach Zugabe von Essigester (1000 ml/mol Silan) und H₂O zur Hydrolyse mit HCl als Kat. wird bei 30°C gerührt. Die Aufarbeitung erfolgt nach mehrtägigem Rühren durch Ausschütteln mit wässriger NaOH und Wasser und Filtration über hydrophobierten Filter. Es wird zunächst abrotiert und anschließend mit Ölpumpenvakuum abgezogen. Es resultiert ein flüssiges Harz mit einer Viskosität von ≈ 3 - 5 Pa·s bei 25°C sowie einer Brechzahl n_{D} ≈ 1,477.

### C1B.- Harzsystem B (aus DE 10 2014 115751)

### 1. Stufe

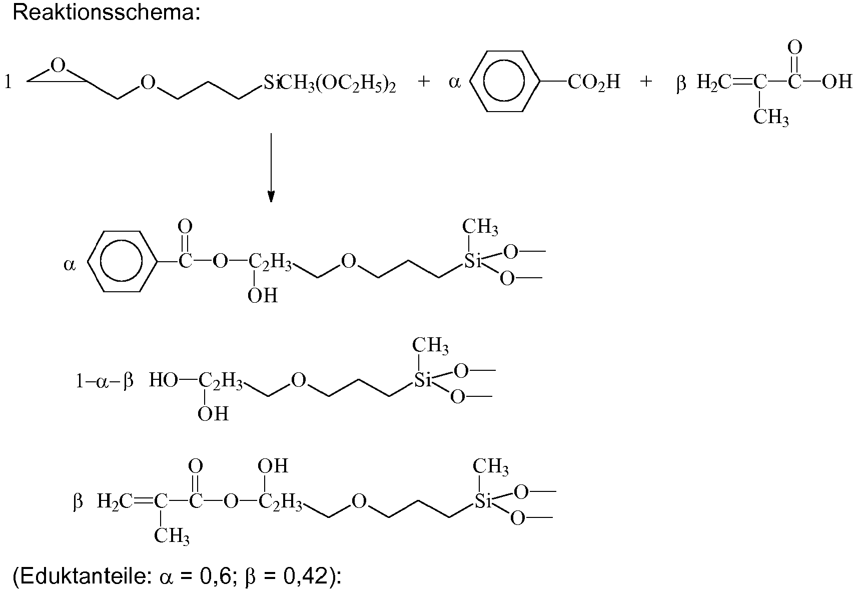

Zur Vorlage von 50,2 g (0,202 mol) 3-Glycidyloxypropylmethyldiethoxysilan werden 0,42 g Triphenyl-phosphin als Kat., 0,04 g BHT (2,6-Di-tert.-butyl-4-methylphenol), 14,7 g (0,12 mol) Benzoesäure und anschließend 7,23 g (0,084 mol) Methacrylsäure zugegeben und bei ≈ 85°C gerührt (ca. 24 h). Die Umsetzung kann entsprechend Beispiel C1A verfolgt werden. Nach Zugabe von Essigester (1000 ml/mol Silan) und H₂O zur Hydrolyse mit HCl als Kat. wird bei 30°C gerührt. Der Verlauf der Hydrolyse wird durch Wassertitration verfolgt. Die Aufarbeitung erfolgt nach mehrtägigem Rühren durch Ausschütteln mit wässriger NaOH und Wasser und Filtration über hydrophobierte Filter. Es wird zunächst abrotiert und anschließend mit Ölpumpenvakuum abgezogen. Es resultiert ein flüssiges Harz ohne Einsatz von Reaktivverdünnern (Monomeren) mit einer Viskosität von ca. 19 - 26 Pa·s bei 25°C sowie einer Brechzahl n_{D} ≈ 1,506.

### 2. Stufe

Anmerkung: die Isocyanat-Gruppe reagiert nicht nur mit der Hydroxygruppe der Umsetzungsprodukte der 1. Stufe, sondern auch mit den vicinalen Hydroxygruppen des unumgesetzten Ausgangsmaterials, soweit dessen cyclische Ethergruppen hydrolytisch geöffnet wurden; es resultiert ein Isomeren-Gemisch

Zur Vorlage von 19,9 g (0,07 mol bez. auf Si) der Reaktionsmischung der 1. Stufe und ggf. 0,026 g BHT werden unter trockener Atmosphäre bei 30°C unter Rühren 6,52 g (0,042 mol) Methacrylsäureisocyanatoethylester zugetropft und bei 30°C weitergerührt. Die Umsetzung kann über die Abnahme der OCN-Bande mittels IR-Spektrum verfolgt werden. Die für die OCN-Gruppe charakteristische Bande erscheint im IR-Spektrum bei 2272 cm⁻¹. Es resultiert ein flüssiges Harz mit einer Viskosität von ca. 102 - 128 Pa·s bei 25°C sowie einer Brechzahl n_{D} ≈ 1,504.

### C1C. Harzsystem C (aus WO 2015/018906 A1)

### 1. Stufe: Grundreaktionsprinzip:

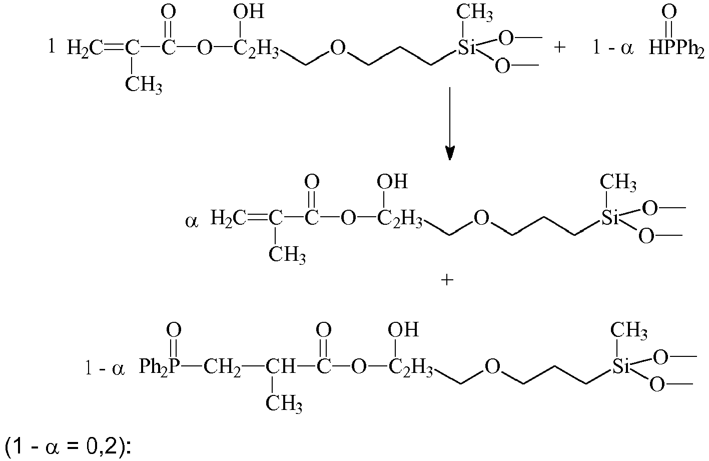

Zur Vorlage von 16,0 g (0,0615 mol) von Harzsystem A werden unter Rühren 2,48 g (0,0123 mol) Diphenylphosphinoxid und 0,2 ml 1,8-Diazabicyclo[5.4.0]undec-7-en (DBU) als Katalysator zugegeben. Das resultierende Reaktionsgemisch wird bei ≈ 50°C bis zur vollständigen Addition gerührt. Die Umsetzung kann z. B. mittels NMR verfolgt werden. Nach üblicher Aufarbeitung z. B. in Essigester (ausschütteln mit Wasser, Filtration über hydrophobierten Filter, abrotieren und abschließendes Abziehen mit Ölpumpenvakuum) resultiert ein flüssiges Harz mit einer Viskosität von ca. 37 Pa·s bei 25°C und einer Brechzahl n_{D} ≈ 1,500.

### 2. Stufe:

Zur Vorlage von 83,2 g des Produkts der Stufe 1 (molares Verhältnis = 1 : 0,4) und ggf. 0,043 g BHT (2,6-Di-tert.-butyl-4-methylphenol) werden unter trockener Atmosphäre bei 30°C unter Rühren 17,2 g (0,4 mol) Methacrylsäure-isocyanatoethylester zugetropft und bei 30°C weitergerührt. Die Umsetzung kann z. B. über die Abnahme der OCN-Bande mittels IR-Spektrum verfolgt werden. Die für die OCN-Gruppe charakteristische Bande erscheint im IR-Spektrum bei ≈ 2272 cm⁻¹. Es resultiert ein flüssiges Harz mit einer Viskosität von ca. 98 Pa·s bei 25°C und einer Brechzahl n_{D} von ca. 1,500. Eine weitere Aufarbeitung ist in der Regel nicht erforderlich.

### C1D. Harzsystem D (aus WO 2015/018906 A1)

### 1. Stufe (1. Variante: Verhältnis Harzsystem A : Thiophenol = 1 : 0,4)

Zur Vorlage von 39,7 g (0,15 mol) von Harzsystem A werden unter Rühren 6,61 g (0,079 mol) Thiophenol zugetropft. Es resultiert ein flüssiges Harz mit einer Viskosität von ca. 7,0 - 7,2 Pa·s bei 25°C und einer Brechzahl n_{D} von ca. 1,506. Eine weitere Aufarbeitung ist nicht erforderlich.

### 1, Stufe (2. Variante: Verhältnis Harzsystem A : Thiophenol = 1 : 0,45)

Zur Vorlage von 121,4 g (0,460 mol) von Harzsystem A werden unter Rühren 22,8 g (0,207 mol) Thiophenol zugetropft. Es resultiert ein flüssiges Harz mit einer Viskosität von ca. 6,9 - 7,0 Pa·s bei 25°C und einer Brechzahl n_{D} von ca. 1,508 (die leicht erhöhte Brechzahl resultiert aus dem höheren Thiophenol-Anteil). Eine weitere Aufarbeitung ist nicht erforderlich.

### 2. Stufe:

### Grundreaktionsprinzip:

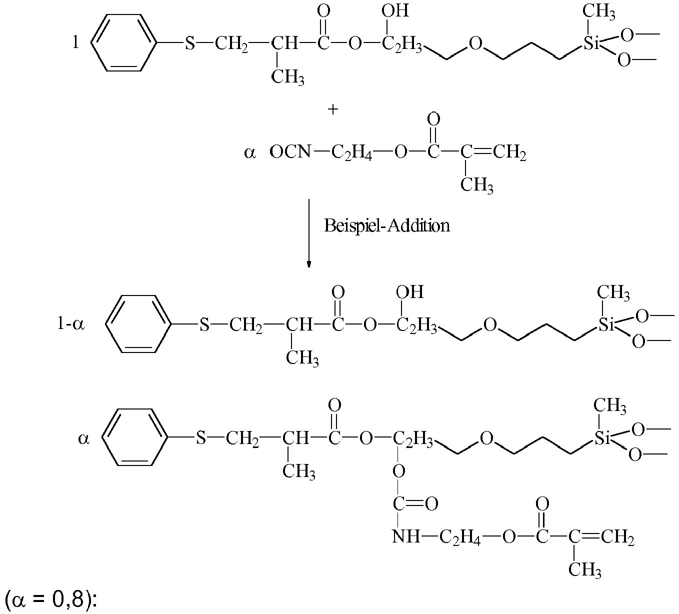

1. Variante: Zur Vorlage von 15,4 g des Produkts der ersten Stufe, 1. Variante (0,05 mol) und 0,043 g BHT (2,6-Di-tert.-butyl-4-methylphenol) werden unter trockener Atmosphäre bei 30°C unter Rühren 6,21 g (0,04 mol) Methacrylsäure-isocyanatoethylester zugetropft und bei 30°C weitergerührt. Die Umsetzung kann z. B. über die Abnahme der OCN-Bande mittels IR-Spektrum verfolgt werden. Die für die OCN-Gruppe charakteristische Bande erscheint im IR-Spektrum bei ≈ 2272 cm⁻¹. Es resultiert ein flüssiges Harz mit einer Viskosität von ca. 36 Pa·s bei 25°C und einer Brechzahl n_{D} von ca. 1,502. Eine weitere Aufarbeitung ist nicht erforderlich.
2. Variante: Zur Vorlage von 138 g des Produkts der ersten Stufe, 2. Variante (0,440 mol) und 0,096 g BHT (2,6-Di-tert.-butyl-4-methylphenol) werden unter trockener Atmosphäre bei 30°C unter Rühren 54,6 g (0,352 mol) Methacrylsäure-isocyanatoethylester zugetropft und bei 30°C weitergerührt. Die für die OCN-Gruppe charakteristische Bande erscheint im IR-Spektrum bei ≈ 2272 cm⁻¹. Es resultiert ein flüssiges Harz mit einer Viskosität von ca. 43 Pa·s bei 25°C und einer Brechzahl n_{D} von ca. 1,506. Eine weitere Aufarbeitung ist nicht erforderlich.

### C1E. Harzsystem E (aus DE 103 49877.8)

### Grundreaktionsprinzip:

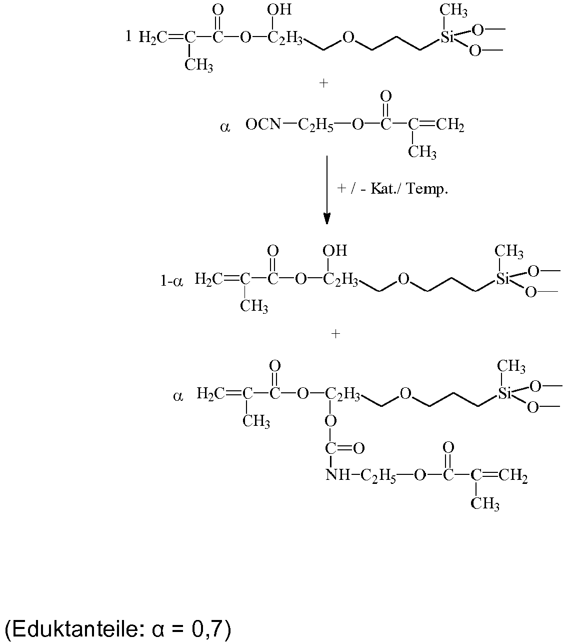

Zur Vorlage von 130,3 g (0,50 mol) Harzsystem A und 0,09 g BHT werden unter trockener Atmosphäre bei 30 °C unter Rühren 54,3 g Methacrylsäureisocyanatoethylester (0,70 mol) zugetropft und bei 30 °C weitergerührt. Nach vollständiger Umsetzung resultiert ein flüssiges Harz mit einer Viskosität von ca. 22 - 28 Pa·s bei 25 °C.

### C2: Komposite und ihre Eigenschaften in ausgehärtetem Zustand

Die nachstehend angegebenen Komponenten wurden vermischt, in Formen gegeben und mit Hilfe der angegebenen Maßnahmen ausgehärtet. Die Messung der Eigenschaften erfolgte nach den oben angegebenen Bestimmungsmethoden

### C2A. Komposite für den Dentinkern

### Beispiel C2A-a

50 Gew.-% Harzsystem B + 2 Gew.-% DBPO
50 Gew.-% Füllstoffanteil, silanisiert (Schottglas GM32087), bestehend aus100 Gew.-%
Ultrafine, Primärpartikelgröße: 0,4 µm (3 Durchgänge im Dreiwalzwerk)
Thermische Härtung für 4 h bei 100°C, 1d trockene Lagerung bei 40°C
Bruchfestigkeit: 136 ± 9 MPa
E-Modul: 5,3 ± 0,2 GPa
Transluzenz: 56%

### Beispiel C2A-b

40 Gew.-% Harzsystem B + 2 Gew.-% DBPO
60 Gew.-% Füllstoffanteil, silanisiert (Schottglas GM27884), bestehend aus100 Gew.-%
Ultrafine, Primärpartikelgröße: 0,7 µm (3 Durchgänge im Dreiwalzwerk)
Thermische Härtung für 4 h bei 100°C, 1d trockene Lagerung bei 40°C
Bruchfestigkeit: 160 ± 6 MPa
E-Modul: 6,8 ± 0,3 GPa
Transluzenz: 68%

### Beispiel C2A-c

40 Gew.-% Harzsystem B + 2 Gew.-% DBPO
60 Gew.-% Füllstoffanteil, silanisiert (Schottglas GM27884), bestehend aus
- 67 Gew.-% Ultrafine, Primärpartikelgröße: 0,4 µm (3 Durchgänge im Dreiwalzwerk)
- 33 Gew.-% Ultrafine, Primärpartikelgröße: 0,7 µm (4 Durchgänge im Dreiwalzwerk)
Thermische Härtung für 4 h bei 100 °C, 1d trockene Lagerung bei 40 °C
Bruchfestigkeit: 159 ± 5 MPa
E-Modul: 6,5 ± 0,3 GPa
Transluzenz: 61%

### Beispiel C2A-d

27 Gew.-% Harzsystem C + 2 Gew.-% DBPO
73 Gew.-% Füllstoffanteil, silanisiert (Schottglas GM27884), bestehend aus
- 18 Gew.-% Ultrafine, Primärpartikelgröße: 0,18 µm (3 Durchgänge im Dreiwalzwerk)
- 14 Gew.-% Ultrafine, Primärpartikelgröße: 0,4 µm (3 Durchgänge im Dreiwalzwerk)
- 68 Gew.-% Standard Grind K6, Primärpartikelgröße: 3 µm (6 Durchgänge im Dreiwalzwerk)
Thermische Härtung für 4 h bei 100°C, 1d trockene Lagerung bei 40°C
Bruchfestigkeit: 171 ± 13 MPa
E-Modul: 10,6 ± 0,1 GPa
Härte: 81 HV
Transluzenz: 25%

### Beispiel C2A-e

40 Gew.-% Harzsystem D (2. Variante) + 1 Gew.-% LTPO
60 Gew.-% Füllstoffanteil, silanisiert (Schottglas GM27884), bestehend aus
- 60 Gew.-% Ultrafine, Primärpartikelgröße: 0,4 µm (2 Durchgänge im Dreiwalzwerk)
- 40 Gew.-% Ultrafine, Primärpartikelgröße: 0,7 µm (3 Durchgänge im Dreiwalzwerk)
Lichthärtung für 2 x 100 s, 1,5 d trockene Lagerung bei 40 °C
Bruchfestigkeit: 158 ± 6 MPa
E-Modul: 6,3 ± 0,223 GPa
Transluzenz: 62 %
Härte: 41 HV 1/10

### Beispiel C2A-f

40 Gew.-% Harzsystem D (2. Variante) + 1 Gew.-% LTPO
60 Gew.-% Füllstoffanteil, silanisiert (Schottglas GM32087), bestehend aus
   - 40 Gew.-% Ultrafine, Primärpartikelgröße: 0,4 µm (2 Durchgänge im Dreiwalzwerk)
   - 60 Gew.-% Ultrafine, Primärpartikelgröße: 5 µm (5 Planetenmischer)
   Lichthärtung für 2 x 100 s, 1,5 d trockene Lagerung bei 40 °C
   Bruchfestigkeit: 154 ± 10 MPa
   E-Modul: 10,7 ± 0,334 GPa
   Transluzenz: 37 %
   Abrasion: 1,49 mm³ Volumenabtrag
   Härte: 78 HV 1/10

### Beispiel C2A-g

50 Gew.-% Harzsystem D (2. Variante) + 1 Gew.-% LTPO
50 Gew.-% Füllstoffanteil, silanisiert (Schottglas GM27884), bestehend aus
- 100 Gew.-% Ultrafine, Primärpartikelgröße: 0,7 µm (2 Durchgänge im Dreiwalzwerk)
Lichthärtung für 2 x 100 s, 1,5 d trockene Lagerung bei 40 °C
Bruchfestigkeit: 150 ± 16 MPa
E-Modul: 5,5 ± 0,370 GPa
Transluzenz: 75 %
Härte: 35 HV 1/10

### C2B. Komposite für die Schmelzschicht

### Beispiel C2B-a

50 Gew.-% Harzsystem A + 2 Gew.-% DBPO
50 Gew.-% Füllstoffanteil, silanisiert (Köstrosol 3550), bestehend aus100 Gew.-% Nanopartikel, Primärpartikelgröße: 0,1 µm
Thermische Härtung für 4 h bei 100°C, 1d trockene Lagerung bei 40°C
Bruchfestigkeit: 111 ± 8 MPa
E-Modul: 4,4 ± 0,1 GPa
Transluzenz: 73%

### Beispiel C2B-b

30 Gew.-% Harzsystem A + 2 Gew.-% DBPO
70 Gew.-% Füllstoffanteil, silanisiert (Köstrosol 3550 und Schottglas G018-307), bestehend aus
- 25 Gew.-% Nanopartikel, Primärpartikelgröße: 0,1 µm
- 75 Gew.-% Ultrafine, Primärpartikelgröße: 0,7 µm (4 Durchgänge im Dreiwalzwerk)
Thermische Härtung für 4 h bei 100°C, 1d trockene Lagerung bei 40°C
Bruchfestigkeit: 165 ± 13 MPa
E-Modul: 8,7 ± 0,4 GPa
Transluzenz: 29%

### Beispiel C2B-c

35 Gew.-% Harzsystem A + 2 Gew.-% DBPO
65 Gew.-% Füllstoffanteil, silanisiert (Schottglas G018-307), bestehend aus100 Gew.-%
Ultrafine, Primärpartikelgröße: 0,7 µm (4 Durchgänge im Dreiwalzwerk)
Thermische Härtung für 4 h bei 100°C, 1d trockene Lagerung bei 40°C
Bruchfestigkeit: 155 ± 11 MPa
E-Modul: 7,7 ± 0,3 GPa
Transluzenz: 66%

### Beispiel C2B-d

30 Gew.-% Harzsystem A + 2 Gew.-% DBPO
70 Gew.-% Füllstoffanteil, silanisiert (Köstrosol 3550 und Schottglas G018-307), bestehend aus
- 25 Gew.-% Nanopartikel, Primärpartikelgröße: 0,1 µm
- 25 Gew.-% Ultrafine, Primärpartikelgröße: 0,4 µm (3 Durchgänge im Dreiwalzwerk)
- 50 Gew.-% Ultrafine, Primärpartikelgröße: 0,7 µm (4 Durchgänge im Dreiwalzwerk)
Thermische Härtung für 4 h bei 100 °C, 1d trockene Lagerung bei 40 °C
Bruchfestigkeit: 155 ± 11 MPa
E-Modul: 8,1 ± 0,6 GPa
Transluzenz: 28%

### Beispiel C2B-e

20 Gew.-% Harzsystem A + 2 Gew.-% DBPO
80 Gew.-% Füllstoffanteil, silanisiert (Köstrosol 3550 und Schottglas G018-307), bestehend aus
- 25 Gew.-% Nanopartikel, Primärpartikelgröße: 0,1 µm
- 25 Gew.-% Ultrafine, Primärpartikelgröße: 0,7 µm (4 Durchgänge im Dreiwalzwerk)
- 50 Gew.-% Standard Grind K5, Primärpartikelgröße: 5 µm (4 Durchgänge im Dreiwalzwerk)
Thermische Härtung für 4 h bei 100°C, 1d trockene Lagerung bei 40°C
Bruchfestigkeit: 169 ± 7 MPa
E-Modul: 13 ± 0,5 GPa
Härte: 91 HV
Transluzenz: 22%
Abrasion: 0,47 mm³ (300000 Zyklen, 5 kg Belastung)

### Beispiel C2B-f

30 Gew.-% Harzsystem D + 1 Gew.-% Lucirin-TPO
70 Gew.-% Füllstoffanteil, silanisiert (Schottglas GM27884), bestehend aus
- 33 Gew.-% Ultrafine, Primärpartikelgröße: 0,7 µm (3 Durchgänge im Dreiwalzwerk)
- 67 Gew.-% Standard Grind K6, Primärpartikelgröße: 3 µm (3 x 15 min im Planetenmischer, 40 U/min,)
Lichtinitiierte Härtung 100 s beidseitig, 1,5 d trockene Lagerung bei 40°C
Bruchfestigkeit: 151 ± 11 MPa
E-Modul: 7,9 ± 0,3 GPa
Transluzenz: 61%

### Beispiel C2B-g

24 Gew.-% Harzsystem E + 2 Gew.-% DBPO
76 Gew.-% Füllstoffanteil, silanisiert (Köstrosol 3550) + silanisiert Schottglas G018-307 bestehend aus:
- 14 Gew.-% Nanopartikel, Primärpartikelgröße: 0,08 µm
- 36 Gew.-% GM27884 Primärpartikelgröße: 0,4 µm (2 Durchgänge im Dreiwalzwerk)
- 50 Gew.-% GM27884 Primärpartikelgröße: 5 µm (5 Durchgänge im Planetenmischer)
Thermische Härtung für 4 h bei 100 °C, 1d trockene Lagerung bei 40 °C
Bruchfestigkeit: 159 ± 6 MPa
E-Modul: 13,0 ± 0,517 GPa
Transluzenz: 22 %
Abrasion: 0,53 mm³ (300000 Zyklen, 5 kg Belastung)
Härte: 101 HV 1/10

### Beispiel C2B-h

24 Gew.-% Harzsystem E + 2 Gew.-% DBPO
76 Gew.-% Füllstoffanteil, silanisiert Schottglas G018-307 bestehend aus:
- 14 Gew.-% G018-307 Primärpartikelgröße: 0,4 µm (2 Durchgänge im Dreiwalzwerk)
- 36 Gew.-% G018-307 Primärpartikelgröße: 0,7 µm (2 Durchgänge im Dreiwalzwerk)
- 50 Gew.-% G018-307 Primärpartikelgröße: 5 µm (5 Durchgänge im Planetenmischer)
Thermische Härtung für 4 h bei 100 °C, 1d trockene Lagerung bei 40 °C
Bruchfestigkeit: 148 ± 6 MPa
E-Modul: 11,7 ± 0,735 GPa
Transluzenz: 38 %
Abrasion: 0,85 mm³ Volumenabtrag
Härte: 100 HV 1/10

### Beispiel C2B-i

40 Gew.-% Harzsystem E + 2 Gew.-% DBPO
60 Gew.-% Füllstoffanteil, silanisiert (Köstrosol 3550) + silanisiert Schottglas G018-307 bestehend aus:
- 29Gew.-% Nanopartikel, Primärpartikelgröße: 0,08 µm
- 71 Gew.-% GM27884 Primärpartikelgröße: 0,4 µm (3 Durchgänge im Dreiwalzwerk)
Thermische Härtung für 4 h bei 100 °C, 1d trockene Lagerung bei 40 °C
Bruchfestigkeit: 151 ± 10 MPa
E-Modul: 7,8 ± 0,336 GPa
Transluzenz: 31 %
Abrasion: 0,38 mm³ (300000 Zyklen, 5 kg Belastung)
Härte: 69 HV 1/10

### Beispiel C2B-j

40 Gew.-% Harzsystem E + 2 Gew.-% DBPO
60 Gew.-% Füllstoffanteil, silanisiert Schottglas G018-307 bestehend aus:
- 29 Gew.-% GM27884 Primärpartikelgröße: 0,4 µm (2 Durchgänge im Dreiwalzwerk)
- 71 Gew.-% GM27884 Primärpartikelgröße: 0,7 µm (3 Durchgänge im Dreiwalzwerk)
Thermische Härtung für 4 h bei 100 °C, 1d trockene Lagerung bei 40 °C
Bruchfestigkeit: 159 ± 8 MPa
E-Modul: 7,4 ± 0,224 GPa
Transluzenz: 60 %
Abrasion: 0,71 mm³ (300000 Zyklen, 5 kg Belastung)
Härte: 70 HV 1/10

### Beispiel C2B-k

27 Gew.-% Harzsystem C + 2 Gew.-% DBPO
73 Gew.-% Füllstoffanteil, silanisiert (Schottglas GM27884), bestehend aus
- 18 Gew.-% Ultrafine, Primärpartikelgröße: 0,18 µm (3 Durchgänge im Dreiwalzwerk)
- 14 Gew.-% Ultrafine, Primärpartikelgröße: 0,4 µm (3 Durchgänge im Dreiwalzwerk)
- 68 Gew.-% Standard Grind K6, Primärpartikelgröße: 3 µm (6 Durchgänge im Dreiwalzwerk)
Thermische Härtung für 4 h bei 100°C, 1d trockene Lagerung bei 40°C
Bruchfestigkeit: 171 ± 13 MPa
E-Modul: 10,6 ± 0,1 GPa
Härte: 81 HV
Transluzenz: 25%

### D. Beispiele für die Herstellung von Mehrschicht-Prothesenzähnen

### Beispiel D1

Die Formteile werden antihaft-beschichtet und für ein besseres Fließverhalten des Komposits auf 45°C temperiert. Zunächst werden das Formunter- und Formoberteil der Dentinform jeweils mit Dentinkomposit (s. Figur 2), welches ebenfalls auf 45°C vorgewärmt wird, mittels einer Spritze gefüllt. Danach wird das Formoberteil auf das Formunterteil aufgesetzt, die Form geschlossen und das Komposit bei 100°C (geeignet für den im konkreten Fall mit DBPO als Initiator eingesetzten Dentin-Komposit; kann ggf. verändert werden) im Ofen für 4 h ausgehärtet. Nach dem Öffnen der Form wird der polymerisierte Dentinkern über den Arretierstift von unten herausgedrückt, für eine mechanische Retention sandgestrahlt und anschließend in das Unterteil U-II eingesetzt, das zusammen mit dem Oberteil O-II die Negativform des endgültigen Zahns samt Schneidebereich darstellt. Das auf 45°C temperierte Komposit für die Schmelzschicht wird mittels einer Spritze jeweils in das Formober- und Formunterteil eingefüllt. Eine kleine runde Öffnung im Oberteil dient als Ablauf für überschüssiges Material. Der Aushärtungsprozess und das Herauslösen des Prothesenzahns entsprechen der Vorgehensweise für den Dentinkern. Abschließend wird, nach Herauslösen des Prothesenzahns aus der Form, der Stift von der Unterseite des Zahns abgelöst.

### Beispiel D2

Zur Herstellung der Zweischicht-Prothesenzähne kommen zweiteilige Formen zum Einsatz, die als Kontur die Negativform des Dentinkerns (Unterteil U-I und Oberteil O-I) bzw. nach Austauschen des Formoberteils O-I durch O-II die Schmelzschicht und somit des gesamten Prothesenzahns besitzen (Unterteil U-I und Oberteil O-II). Diese Negativformen verlaufen nach oben hin leicht konisch, um das Herauslösen des Prothesenzahns nach der Polymerisation zu erleichtern. Die Formen besitzen im Gegensatz zu denen des Beispiels D1 keinen Hohlraum für die Ausbildung eines Arretierstifts. Sie sind in Figur 5 gezeigt; dort ist eine Ausgestaltung zu sehen, mit der gleich eine Mehrzahl von Zähnen hergestellt werden kann. Selbstverständlich kann diese Formensystem-Variante auch nur mit einem Hohlraum für die Herstellung eines Zahns oder Zahnteils verwirklicht werden.

Die Formteile werden antihaft-beschichtet und für ein besseres Fließverhalten des Komposits auf 45°C temperiert. Zunächst werden das Formunter- und Formoberteil der Dentinform jeweils mit Dentinkomposit, welches ebenfalls auf 45°C vorgewärmt wird, mittels einer Spritze gefüllt. Danach wird das Formoberteil auf das Formunterteil aufgesetzt, die Form geschlossen und das Komposit bei 100°C im Ofen für vier Stunden ausgehärtet. Nach dem Öffnen der Form wird der aus der Form herausragende Bereich des polymerisierten Dentinkerns, auf den im Anschluss das auf 45°C temperierte Komposit für die Schmelzschicht aufgetragen wird, für eine mechanische Retention sandgestrahlt. Die Form wird mit dem zweiten Formoberteil O-II geschlossen, das die Negativform des endgültigen Zahns samt Schneidebereich darstellt, wobei eine kleine runde Öffnung im Oberteil als Ablauf für überschüssiges Material dient. Nach dem Aushärtungsprozess bei 100°C im Ofen für vier Stunden wird der Prothesenzahn aus der Form herausgelöst.

### Beispiel D3

Zur Herstellung der Zweischicht-Prothesenzähne kommt im ersten Schritt eine einteilige Form (Unterteil U-I) zum Einsatz (s. Figur 6), die als Kontur die Negativform des Dentinkerns besitzt. Für den anschließenden Aufbau der Schmelzschicht bzw. des gesamten Prothesenzahns wird eine zweiteilige Form (Unterteil U-II und Oberteil O-I) verwendet. Die Negativformen verlaufen nach oben hin leicht konisch, um das Herauslösen des Dentinkerns bzw. des Prothesenzahns nach der Polymerisation zu erleichtern. Zusätzlich verfügen die Formunterteile (U-I und U-II) mittig und über die gesamte Höhe bis zur Unterseite (Basalseite) des späteren Zahns eine runde Öffnung mit einem Durchmesser von etwa 3 mm, der als Arretier- und Greifstift dient.

Die Formteile werden antihaft-beschichtet und für ein besseres Fließverhalten des Komposits auf 45°C temperiert. Zunächst wird das Formunterteil der Dentinform (U-I) mit Dentinkomposit, welches ebenfalls auf 45°C vorgewärmt wird, mittels einer Spritze gefüllt und thermisch bei 100°C im Ofen für vier Stunden, mittels Blaulichtstrahler (z.B. für 100 s) oder IR-Strahler ausgehärtet. Der Infrarotstrahler (IR-Strahler) befindet sich dabei in einem Abstand von 7 cm zur befüllten Form. Die IR-Leistung und die Einwirkdauer der Bestrahlung kann variiert werden. Für die Komposite wird eine maximale Leistung festgelegt, um die benötigten Zerfalltemperaturen für die jeweiligen thermischen Starter zu gewährleisten bzw. eine Materialschädigung auszuschließen. Diese kann beispielsweise 200 Watt betragen. Der polymerisierte Dentinkern wird über den Arretierstift von unten herausgedrückt, für eine mechanische Retention sandgestrahlt und anschließend in das Unterteil U-II eingesetzt, das zusammen mit dem Oberteil O-II die Negativform des endgültigen Zahns samt Schneidebereich darstellt. Das auf 45°C temperierte Komposit für die Schmelzschicht wird mittels einer Spritze jeweils in das Formober- und Formunterteil eingefüllt und die Form anschließend verschlossen. Eine kleine runde Öffnung im Oberteil dient als Ablauf für überschüssiges Material. Nach dem Aushärten des Komposits bei 100°C im Ofen für vier Stunden wird der polymerisierte Prothesenzahn nach dem Öffnen der Form über den Arretierstift von unten herausgedrückt und der Stift von der Unterseite des Zahns abgelöst.

### E. Ausgehärtete Prothesenzähne

### E1.

Das Verfahren zur Herstellung von Prothesenzähnen wurde mit dem Dentinkomposit C2A-c und dem Schneidkomposit C2B-e nach dem Verfahren D1 durchgeführt. Die Ergebnisse der Druckversuche der aus diesen Kompositen hergestellten Prothesenzähne zeigten, dass sie mit 3,1 kN einer um ein Vielfaches größeren Kraft als der in der Literatur angegebenen menschlichen Kaukraft mit 0,14 bis 0,73 kN standhalten.

### E2.

Das Verfahren zur Herstellung von Prothesenzähnen wurde mit dem Dentinkomposit C2A-e und dem Schneidkomposit C2B-g nach dem Verfahren D3 (Lichthärtung für Dentinkomposit + thermische Härtung für Schneidekomposit) durchgeführt. Die Ergebnisse der Druckversuche der aus diesen Kompositen hergestellten Prothesenzähne zeigten, dass sie mit 3,7 ± 0,4 kN einer um ein Vielfaches größeren Kraft als der in der Literatur angegebenen menschlichen Kaukraft mit 0,14 bis 0,73 kN standhalten.

Für beide Verfahren E1. und E2. kann zusammen mit der hohen Stauchung bis zum Bruch und der damit gezeigten Flexibilität von einer ausgesprochen erfolgreichen Herstellung und Funktionsfähigkeit der Zweischicht-Prothesenzähne gesprochen werden

## Patentansprüche

1. Dentalprothese, umfassend einen ersten, inneren Teilbereich, der ein erstes organisch polymerisiertes Material aufweist, und einen zweiten, äußeren Teilbereich, der ein zweites organisch polymerisiertes Material aufweist, bei dem es sich um ein organisch modifiziertes und organisch polymerisiertes Kieselsäure(hetero)polykondensat handelt, **dadurch gekennzeichnet, dass** der erste, innere Teilbereich eine Biegefestigkeit von über 80 MPa nach DIN EN ISO 4049: 2009 besitzt und einen kleineren E-Modul aufweist als der zweite, äußere Teilbereich, während der zweite, äußere Teilbereich eine Biegefestigkeit von mindestens 100 MPa nach DIN EN ISO 4049: 2009 besitzt.

2. Dentalprothese nach Anspruch 1, worin das erste organisch polymerisierte Material mithilfe von organisch polymerisierbaren Gruppen polymerisiert wurde, die mit Gruppen des zweiten organisch polymerisierten Materials copolymerisierbar sind, und/oder worin das erste organisch polymerisierte Material ein erstes organisch modifiziertes und organisch polymerisiertes Kieselsäure(hetero)polykondensat ist.

3. Dentalprothese nach Anspruch 1 oder 2, worin der erste, innere Teilbereich und/oder der zweite, äußere Teilbereich jeweils eine Biegefestigkeit von mindestens 130 MPa aufweisen, wobei die Biegefestigkeit des zweiten, äußeren Teilbereichs größer sein kann als die des ersten, inneren Teilbereichs.

4. Dentalprothese nach einem der voranstehenden Ansprüche, worin der E-Modul des ersten, inneren Teilbereichs mindestens 5,0 GPa und der E-Modul des zweiten, äußeren Teilbereichs mindestens 7,5 GPa, gemessen nach DIN EN ISO 4049: 2009, beträgt.

5. Verfahren zum Herstellen einer Dentalprothese nach einem der voranstehenden Ansprüche, **dadurch gekennzeichnet, dass**
(a) ein organisch polymerisierbares Material als Vorstufe für den ersten, inneren Teilbereich der Dentalprothese in eine erste Negativform gefüllt und dort verfestigt wird,
(b) der verfestigte erste, innere Teilbereich in einem Teil einer zweiten Negativform, die einen Hohlraum mit im Wesentlichen der Form der Dentalprothese aufweist, mit einem organisch polymerisierbaren Kieselsäure(hetero)polykondensat als Vorstufe für den zweiten, äußeren Teilbereich versehen wird,
(c) die zweite Negativform verschlossen wird,
(d) der zweite, äußere Teilbereich durch Wärmehärtung verfestigt wird und
(e) die Dentalprothese aus der Form genommen wird.

6. Verfahren nach Anspruch 5, worin die erste Negativform aus zwei oder mehr Teilbereichen (U-I/O-I) besteht und nach dem Befüllen gemäß Schritt (a) verschlossen wird, worauf der erste, innere Teilbereich durch Wärmehärtung verfestigt wird.

7. Verfahren nach Anspruch 5, worin die erste Negativform (UI) nach dem Befüllen gemäß Schritt (a) offen bleibt und der erste, innere Teilbereich durch die Einwirkung elektromagnetischer Strahlung, vorzugsweise durch Licht oder IR-Strahlung, verfestigt wird.

8. Verfahren nach einem der Ansprüche 5 bis 7, worin der verfestigte erste, innere Teilbereich der Dentalprothese aus der ersten Negativform genommen und in die zweite Negativform überführt wird.

9. Verfahren nach einem der Ansprüche 5 bis 7, worin der verfestigte erste, innere Teilbereich der Dentalprothese in einem Teil (U-I) der ersten Negativform belassen wird, wobei dieser Teil der ersten Negativform zusammen mit einer weiteren Negativ-Teilform (O-II) die zweite Negativform bildet.

10. Verfahren nach einem der Ansprüche 5 bis 9, worin die erste Negativform einen mit der negativen Form für den ersten, inneren Teilbereich der Dentalprothese verbundenen zusätzlichen Hohlraum besitzt, in den in Schritt (a) des Verfahrens ebenfalls noch nicht organisch polymerisiertes Kieselsäure(hetero)polykondensat eingefüllt wird, derart, dass ein Arretier- oder Greifstift am ersten, inneren Teilbereich angeformt wird.

11. Verwendung einer Dentalprothese nach einem der Ansprüche 1 bis 4 als CAD/CAM-Block zur Herstellung von Ein- oder Mehrschichtkronen, Inlays, Onlays oder Veneers, oder als vorgefertigte Ein- oder Mehrschichtkronen, wobei die Dentalprothese über einen CAD/CAM-Prozess endbearbeitet wird.

## Claims

1. A dental prosthesis comprising a first, inner partial region, which has a first organically polymerised material, and a second, outer partial region, which has a second organically polymerised material being an organically modified and organically polymerised silica (hetero)polycondensate, **characterised in that** the first, inner partial region has a bending strength of more than 80 MPa according to DIN EN ISO 4049: 2009 and has a smaller modulus of elasticity than the second, outer partial region, while the second, outer partial region has a flexural strength of at least 100 MPa according to DIN EN ISO 4049: 2009.

2. The dental prosthesis according to claim 1, wherein the first organically polymerised material has been polymerised by means of organically polymerisable groups copolymerisable with groups of the second organically polymerised material, and/or wherein the first organically polymerised material is a first organically modified and organically polymerised silica (hetero)polycondensate.

3. The dental prosthesis according to claim 1 or 2, wherein the first, inner partial region and/or the second, outer partial region each have a flexural strength of at least 130 MPa, wherein the flexural strength of the second, outer partial region may be greater than that of the first, inner partial region.

4. The dental prosthesis according to one of the above claims, wherein the modulus of elasticity of the first, inner partial area is at least 5.0 GPa and the modulus of elasticity of the second, outer partial area is at least 7.5 GPa, measured according to DIN EN ISO 4049: 2009.

5. A method for producing a dental prosthesis according to one of the above claims, **characterized in that**
(a) an organically polymerizable material as a precursor for the first, inner partial region of the dental prosthesis is filled into a first negative mould and solidified there,
(b) the solidified first, inner partial region is filled into a part of a second negative mould, which has a cavity with essentially the shape of the dental prosthesis, is provided with an organically polymerizable silicic acid (hetero)polycondensate as a precursor for the second, outer partial region,
(c) the second negative mould is closed,
(d) the second, outer partial region is solidified by heat curing and
(e) the dental prosthesis is removed from the mould.

6. The method according to claim 5, wherein the first negative mould consists of two or more partial regions (U-I/O-I) and is closed after filling according to step (a), whereupon the first, inner partial region is solidified by heat curing.

7. The method according to claim 5, wherein the first negative mould (UI) remains open after filling according to step (a) and the first, inner partial area is solidified by the action of electromagnetic radiation, preferably by light or IR radiation.

8. The method according to any one of claims 5 to 7, wherein the solidified first, inner part of the dental prosthesis is taken from the first negative mould and transferred into the second negative mould.

9. The method according to one of claims 5 to 7, in which the solidified first, inner partial region of the dental prosthesis is left in a part (U-I) of the first negative mould, this part of the first negative mould together with a further negative partial mould (O-II) forming the second negative mould.

10. The method according to one of claims 5 to 9, in which the first negative mould has an additional cavity connected to the negative mould for the first, inner partial region of the dental prosthesis, into which silicic acid (hetero)polycondensate which has not yet been organically polymerised in step (a) of the method is also filled, in such a way that a locking or gripping pin is moulded onto the first, inner partial region.

11. Use of a dental prosthesis according to one of claims 1 to 4 as a CAD/CAM block for the production of single- or multi-layer crowns, inlays, onlays or veneers, or as prefabricated single- or multi-layer crowns, wherein the dental prosthesis is finished by a CAD/CAM process.

## Revendications

1. Prothèse dentaire, comprenant une première zone partielle interne qui présente un premier matériau polymérisé organiquement et une deuxième zone partielle externe qui présente un deuxième matériau polymérisé organiquement, qui est un (hétéro)polycondensat de silice modifié organiquement et polymérisé organiquement, **caractérisée en ce que** la première zone partielle interne possède une résistance à la flexion de plus de 80 MPa selon la norme DIN EN ISO 4049: 2009 et présente un module d'élasticité inférieur à la deuxième zone partielle externe, alors que la deuxième zone partielle externe possède une résistance à la flexion d'au moins 100 MPa selon la norme DIN EN ISO 4049: 2009.

2. Prothèse dentaire selon la revendication 1, dans laquelle le premier matériau polymérisé organiquement a été polymérisé à l'aide de groupes qui peuvent être polymérisés organiquement et qui peuvent être copolymérisés avec des groupes du deuxième matériau polymérisé organiquement, et/ou dans laquelle le premier matériau polymérisé organiquement est un premier (hétéro)polycondensat de silice modifié organiquement et polymérisé organiquement.

3. Prothèse dentaire selon la revendication 1 ou 2, dans laquelle la première zone partielle interne et/ou la deuxième zone partielle externe présentent respectivement une résistance à la flexion d'au moins 130 MPa, la résistance à la flexion de la deuxième zone partielle externe pouvant être supérieure à celle de la première zone partielle interne.

4. Prothèse dentaire selon une des revendications précédentes, dans laquelle le module d'élasticité de la première zone partielle interne est au moins de 5,0 GPa et le module d'élasticité de la deuxième zone partielle externe est au moins de 7,5 GPa, mesurés selon la norme DIN EN ISO 4049: 2009.

5. Procédé de fabrication d'une prothèse dentaire selon une des revendications précédentes, **caractérisé en ce que**
(a) on remplit un matériau qui peut être polymérisé organiquement dans un premier moule négatif où il est durci, comme étape préalable à la première zone partielle interne de la prothèse dentaire,
(b) on dote la première zone partielle interne durcie d'un (hétéro)polycondensat de silice qui peut être polymérisé organiquement dans une partie d'un deuxième moule négatif qui présente une cavité ayant sensiblement la forme de la prothèse dentaire, comme étape préalable à la deuxième zone partielle externe,
(c) on ferme le deuxième moule négatif,
(d) on durcit la deuxième zone partielle externe par thermodurcissement et
(e) on extrait la prothèse dentaire du moule.

6. Procédé selon la revendication 5, dans lequel le premier moule négatif se compose de deux zones partielles ou plus (U-I/O-I) et est fermé après le remplissage à l'étape (a), ce qui permet de durcir la première zone partielle interne par thermodurcissement.

7. Procédé selon la revendication 5, dans lequel le premier moule négatif (UI) reste ouvert après le remplissage à l'étape (a) et la première zone partielle interne est durcie sous l'action d'un rayonnement électromagnétique, de préférence de la lumière ou d'un rayonnement IR.

8. Procédé selon une des revendications 5 à 7, dans lequel la première zone partielle interne durcie de la prothèse dentaire est extraite du premier moule négatif et transférée dans le deuxième moule négatif.

9. Procédé selon une des revendications 5 à 7, dans lequel la première zone partielle interne durcie de la prothèse dentaire est laissée dans une partie (U-I) du premier moule négatif, cette partie du premier moule négatif conjointement avec un autre moule partiel négatif (O-II) formant le deuxième moule négatif.

10. Procédé selon une des revendications 5 à 9, dans lequel le premier moule négatif possède une cavité supplémentaire reliée au moule négatif pour la première zone partielle interne de la prothèse dentaire, et dans laquelle à l'étape (a) du procédé un (hétéro)polycondensat de silice non encore polymérisé organiquement est également rempli de manière à façonner une cheville de blocage ou de prise au niveau de la première zone partielle interne.

11. Utilisation d'une prothèse dentaire selon une des revendications 1 à 4 sous la forme d'un bloc CAO/FAO pour fabriquer des couronnes à une ou plusieurs couches, des inlays, des onlays ou des facettes prothétiques, ou sous la forme de couronnes à une ou plusieurs couches préfabriquées, la prothèse dentaire étant finalisée par le biais d'un processus CAO/FAO.
